# EUROPEAN PATENT APPLICATION

(11) **EP 1 841 147 A1**
(43) Date of publication of application: **03.10.2007**
(21) Application number: 06711825.7
(22) Date of filing: 17.01.2006
(51) Int. Cl.: H04L 12/56

(54) **COMMUNICATION MANAGEMENT METHOD AND COMMUNICATION MANAGEMENT DEVICE**

(30) Priority: 18.01.2005 JP 2005010100; 08.07.2005 JP 2005200921
(71) Applicant: MATSUSHITA ELECTRIC INDUSTRIAL CO., LTD., Osaka 571-8501 (JP)
(72) Inventor: HIRANO, Jun Matsushita Electric Industrial Co. Ltd., Osaka-shi, Osaka 540-6207 (JP)
(74) Representative: Grünecker, Kinkeldey, Stockmair & Schwanhäusser Anwaltssozietät
(86) International application number: PCT/JP2006/300545
(87) International publication number: WO 2006/077835

(57) **Abstract**

The avoidance of congestion between a mobile node (MN) and an access router (AR), connected to each other through radio communication, is achieved by reducing the volume of information to be transmitted between the MN and the AR. In particular, for the purpose of realizing the reduction of the information volume to be transmitted between a mobile router (MR) and an access router and the avoidance of congestion, an MR 11 reports information on route optimization, conducted with respect to a communication partner node, through the use of an RO information reporting unit 66 to an upper-layer AR connected thereto and makes a request through the use of an RO proxy requesting unit 65 so that an AR to be connected thereto after next movement conducts route optimization processing instead of the MR. When the MR moves and establishes a connection with a new AR, the MR transmits a route optimization proxy execution request through an execution requesting unit 68 to the new AR. The new AR with which the MR has established a connection after the movement acquires the information on the route optimization for the MR from the AR with which the MR established the connection before the movement and carries out the route optimization processing as the proxy for the MR.

## Description

### TECHNICAL FIELD

The present invention relates to a communication management method and communication management device in communication utilizing an internet protocol (IP), and more particularly to a communication management method and communication management device in communication relative to a mobile network in which the entire network moves according to the movement of a mobile router.

### BACKGROUND ART

Presently, a large number of devices use an IP network for the mutual communication. For providing a mobility support to mobile apparatus, a mobility based upon the IPv6 (Internet Protocol version 6) is in progress in the IETF (Internet Engineering Task Force). In the case of the mobile IP, each mobile node retains a permanent home domain. In a case in which a mobile node is in connection with a home network to which it pertains, a primary global address known as a home address (HoA) is allocated to the mobile node. On the other hand, in a case in which the mobile node is remote from the home network, that is, when it is connected to a different foreign network, a temporary global address known as a care-of address (CoA) is normally allocated to the mobile node. According to the concept of the mobility support, even if a mobile node is in connection with a different foreign network, its own hone address enables the arrival at that mobile node.

In the following Non-Patent Document 1, this concept is put in practice in a manner such that a home agent (HA) is introduced into a hone network. A mobile node registers a care-of address in the home agent through the use of a BU (Binding Update) message. In this way, the home agent can produce the binding between the home address of the mobile node and the care-of address thereof. The home agent has a function to receive (intercept) a message directed at the home address of the mobile node and to transfer a packet to the care-of address of the mobile node through the use of the encapsulation of that packet (this signifies that one packet is placed into a payload of a new packet, and it is known as the packet tunneling).

Although the above-mentioned technique enables the mobility support, problems known as sub-optimization (sub-optimal) or dogleg routing arise as a result. These problems stem from the fact that, when a mobile node establishes a communication with a correspondent node (CN), a packet to be transmitted therebetween is required to pass through a home agent. For this reason, the Non-Patent Document 1 specifies that a mobile node can transmit a BU message to a correspondent node. In a case in which the correspondent node seizes the binding between the home address of the mobile node and the care-of address thereof, the correspondent node and the mobile node can be made to carry out the mutually direct (without passing through the home agent) transmission of a packet in a state where the care-of address of the mobile node is set as the source or destination.

However, when consideration is given to security, since it is assumed that the mobile node and the home agent thereof share the security association, although a BU message to be transmitted from the mobile node to the home agent can be secure, this assumption is unreal between the mobile node and the correspondent node, that is, in many cases, the BU message to be transmitted from the mobile node to the correspondent node is not placed into a safe (secure) state.

For this reason, the Non-Patent Document 1 specifies a return routability (RR) test to be carried out prior to the transmission of the BU message. Through this RR test, the correspondent node can confirm that the care-of address and the home address, specified in the BU message, are actually associated with each other. Basically, for the RR test, it is solicited that the mobile node acquires two tokens, generated in a secure state, from the correspondent node prior to the transmission of the BU message to the correspondent node.

For the beginning of an RR procedure, first of all, the mobile node transmits two messages of a Home-test-Init (HoTI) message and a Care-of Test-Init (CoTI), different from each other, to the correspondent node. In the HoTI, a home address of the mobile node is set as the source of a packet and is transmitted through the home agent. On the other hand, in the CoTI, a care-of address of the mobile node is set as the source of a packet and is directly transmitted. Upon receipt of the HoTI, the correspondent node makes a response by transmitting a Home-Test (HoT) message toward the home address of the mobile node. This HoT contains a security token referred to as a Home Keygen Token (HoK). This HoK is to be generated by the encryption using a private key on the basis of the home address of the mobile node. Likewise, upon receipt of the CoTI, the correspondent node makes a response by transmitting a Care-of-Test (CoT) message to the care-of address of the mobile node. This CoT contains a security token called as a Care-of Keygen Token (CoK). This CoK is to be generated by the encryption using a private key on the basis of the care-of address of the mobile node.

When receiving both the messages of the HOT message and the CoT message, the mobile node can transmit a BU message including authentication information (Auth : Authenticator) to the correspondent node. This authentication information is a check sum of a BU message generated by the encryption by use of a key produced by the connection between the HoK and the CoK. With this method, in the case of the reception of the BU, the correspondent node can carry out the calculation of the check sum by itself so as to confirm that this check sum is the same as that in the authentication information, thus making a confirmation on the fact that the care-of address and the home address are actually associated with each other.

On the other hand, the number of ratio devices is in a further accelerated state, and it is expected that new technical fields will appear in the mobility technology. One is a network mobility (NEMO) in which the entire network including nodes directly changes a connection point. In the network mobility, the concept of each mobility support for host is extended to a mobility support for a network including nodes and, it is an object to, even in a case in which a mobile network is connected through any connection point to the internet, enable the arrival at a node in the mobile network through the use of a primary global address.

There already exist some attempts to make the solution to the network problems related to the movement based on the mobile IP. One of the solutions proposed with respect to the movement network problems is the mobile support disclosed in the following Patent Document 1. In this case,amobilerouter, which controls a mobile network, employs a given routing protocol at the existence in a home domain and carries out the routing of a packet to the mobile network or a packet from the mobile network. On the other hand, in a case in which the mobile router and the mobile network to which it pertains move a foreign domain, the mobile router registers its own home agent in the care-of address thereof and, following this, a tunnel is set up between the mobile router and the home agent. In addition, the routing protocol which was used when the mobile router existed in the home domain is again conducted through this tunnel. In this way, all the packets addressed to the mobile network are received (intercepted) by the home agent and are transferred through the tunnel to the mobile router. Moreover, the packets are transferred to a host in this mobile network by the mobile router. On the other hand, in a case in which a node in this mobile network tries to conduct the transmission of a packet to the exterior of the mobile network, the mobile router receives (intercepts) this packet and transfer it through the tunnel to the home agent, and the packet transmission is conducted through the home agent to a set receiver. In addition, a different solution disclosed in the following Patent Document 2 is almost similar thereto although it is specified with respect to the support for only the IPv6.

Meanwhile, the following Patent Document 3 discloses a method of using a multicast address as a care-of address of a mobile router. According to this method, even after the movement to a new access network, the mobile router can reach it by using the same care-of address. Moreover, in the case of the IETF, a solution to the network mobility is in progress even at present as disclosed in the following Non-Patent Document 2. The Non-Patent Document 2 discloses that network prefix which is used by a node in a mobile network can be specified when a mobile router transmits a BU message to a hone agent. The network prefix is specified using a special option known as a network prefix option to be inserted into a BU message. Thus, the home agent can construct a routing table on the basis of the network prefix and, as a result, the home agent can transfer all the packets, addressed to this network prefix, to the care-of address of the mobile router.
Non-Patent Document 1 : Johnson, D. B., Perkins, C. E., and Arkko, J., "Mobility Support in IPv6", Internet Draft: draft-ietf-mobileip-ipv6-24.txt, Work In Progress, June 2003.
Non-Patent Document 2 : Devarapalli, V., et. al., "NEMO Basic Support Protocol", IETF Internet Draft: draft-ietf-nemo-basic-02.txt, Dec 2003
Patent Document 1 : US Patent 6636498
Patent Document 2 : US Patent Application Publication 2003-117965
Patent Document 3 : US Patent Application Publication 2003-95523

However, in the case of a combination of the above-mentioned concept of the NEMO and route optimization, there is a possibility that, depending upon using environments, difficulty is experienced in sufficiently utilizing their advantages. Among such using environments, for example, there are a using environment in which a sufficient communication band is not secured between a mobile router having a large number of mobile network nodes as subordinates and an upper-layer access router connected to this mobile router because sufficient radio resources are unobtainable or for other reasons and a using environment in which a mobile router is moving at a relatively high speed and the updating of the positional information on the mobile router frequently takes place.

Such a using environment can occur in a case in which, for example, a train or the like made to carry many passengers is carrying a large number of passengers. In this case, a large number of mobile network nodes (communication devices carried by the large number of passengers, or communication devices located in the mobile object) exist in the mobile object, and there is a possibility that a sufficiently wide band is not maintainable in the communication between the mobile router in the mobile object having these mobile network nodes as subordinates and the ground side (railway line). Also in a case in which the mobile object is an airplane, ship or the like, there is a possibility that the communication cannot use a sufficiently wide band because of the communication through a satellite with the ground side.

In a case in which the mobile router carries out a route optimization for communication between mobile network nodes and CNs in the exterior of the mobile network under such an environment, it needs that the route optimization is carried out with respect to a large number of CNs along with the number of mobile network nodes, and the amount of a series of information when a mobile router makes communication with respect to the large number of CNs increases because of the route optimization. In consequence, a large volume of information is transmitted from the mobile router to an access router at the same timing, and not only this brings pressure on the intended data communication but also there is a possibility that the registration of the positional information cannot reach completion and the communication falls into an incapable state. In a case in which a large volume of information is transmitted from the mobile router so that congestion occurs in the network, it tends to occur at the timing that the mobile router establishes a connection with a new access router and carries out the route optimization relative to a large number of CNs.

In addition to the case of the mobile router, also in the case of a mobile host, there exists a problem in effective utilization of limited radio resources. Moreover, as well as the above-mentioned case of the mobile router, for example, in a case in which the mobile host makes communication with a large number of CNs, there is a high possibility that congestion in radio transmission lines or networks occurs because the route optimization is conducted with respect to a large number of CNs at the connection to a new access router.

### DISCLOSURE OF THE INVENTION

In consideration of the above-mentioned problems, it is an object of the present invention to provide a communication management method and communication management device capable of reducing the amount of information to be transmitted between a mobile node (mobile host or mobile router) and an access router which are connected through radio communication and of avoiding the congestion between the mobile node and the access router.

For achieving the above-mentioned purpose, a communication management method according to the present invention, which controls an operation of a mobile router having a mobile network as a subordinate and moving while changing a connection with each of a plurality of access routers, comprises:
a route optimization information reporting step in which, in a state before movement, the mobile router reports information on route optimization relative to a communication node, to which the route optimization is conducted, to the access router in connection before the movement; and
a proxy requesting step in which the mobile router makes a request to the access router in connection before the movement for the transmission of the information on the route optimization to the access router establishing connection after the movement so that the access router establishing connection after the next movement is capable of carrying out proxy processing for the route optimization for the mobile router by use of the information on the route optimization reported in the route optimization information reporting step.
With this arrangement, the mobile router can pass the information on the route optimization to the access router in connection prior to the movement to reduce the information volume of the information on the route optimization to be transmitted when it establishes a connection with a new access router after the movement, which enables avoiding the congestion between the mobile router and the access router.

In addition to the aforesaid invention, in the communication management method according to the present invention, the report of the information in the route optimization information reporting step is made with a message addressed to the access router in connection before the movement or a message having a state where the information is extractable by the access router in connection before the movement and addressed to a node different from the access router in connection before the movement.
With this arrangement, the access router can acquire the information on the route optimization through a specified message sent from the mobile router, or it can receive (intercept) a BU message or the like from the mobile router to extract and acquire the information on the route optimization.

Moreover, in addition to the aforesaid invention, the communication management method according to the present invention comprises an execution request transmitting step in which, after a change of connection from the access router in connection before the movement to the access router establishing connection after the movement, the mobile router makes a request for an execution of the proxy processing for the route optimization to the access router establishing connection after the movement.
With this arrangement, the information on the route optimization is transmitted from the access router in connection before the movement to the access router establishing connection after the movement, and the mobile router can make a request for the execution of the proxy processing for the route optimization for the access router establishing connection after the movement.

Still moreover, in addition to the aforesaid invention, the communication management method according to the present invention comprises a route optimization executing step in which, after a change of connection from the access router in connection before the movement to the access router establishing connection after the movement, when the mobile router grasps the fact that the proxy processing for the route optimization is not conducted by the access router establishing connection after the movement, the mobile router itself executes the route optimization.
With this arrangement, in a case in which the access router establishing connection after the movement is incapable of carrying out the proxy processing for the route optimization, the mobile router can make the switching to an operation for the route optimization by itself.

Yet moreover, in addition to the aforesaid invention, the communication management method according to the present invention comprises a result receiving step in which, after a change of connection from the access router in connection before the movement to the access router establishing connection after the movement, the mobile router receives, from the access router establishing connection after the movement, a result of the proxy processing for the route optimization conducted by the access router establishing connection after the movement on the basis of the information on the route optimization held by the access router in connection before the movement.
With this arrangement, the mobile router can grasp a result of the proxy processing for the route optimization conducted by the access router establishing connection after the movement.

Furthermore, in addition to the aforesaid invention, the communication management method according to the present invention comprises an additional change execution judging step in which the mobile router makes a judgment as to whether or not a need exists to conduct additional processing for the route optimization.
With this arrangement, in addition to the proxy processing for the route optimization conducted by the access router establishing connection after the movement, the mobile router can make a decision as to whether or not there is a need to carry out the additional change processing.

Still furthermore, in addition to the aforesaid invention, the communication management method according to the present invention comprises an additional processing executing step in which, when the judgment in the additional change execution judging step shows that a need exists to conduct additional processing for the route optimization, the mobile router itself conducts the additional processing for the route optimization.
With this arrangement, if the additional change processing is necessary, the mobile router can carry out this additional change processing by itself.

Yet furthermore, in addition to the aforesaid invention, the communication management method according to the present invention comprises an additional change information reporting step in which, when the judgment in the additional change execution judging step shows that a need exists to conduct additional processing for the route optimization, the mobile router notifies information for conducting the additional processing for the route optimization to the access router establishing connection after the movement.
With this arrangement, when there is a need to conduct the additional change processing, the mobile router can notify the information for conducting the additional processing for the route optimization to the access router for making a request for the proxy of the additional processing for the route optimization.

Moreover, in addition to the aforesaid invention, in the communication management method according to the present invention, the report of the information in the additional change information reporting step is made with a message addressed to the access router establishing connection after the movement or a message having a state where the information is extractable by the access router establishing connection after the movement and addressed to a node different from the access router establishing connection after the movement.
With this arrangement, the access router can acquire the additional information on the route optimization through a specified message sent from the mobile router, or it can receive (intercept) a BU message or the like from the mobile router to extract and acquire the information on the route optimization.

Still moreover, in addition to the aforesaid invention, in the communication management method according to the present invention, the access router establishing connection after the movement is designed to make a judgment as to whether or not a need exists to conduct the additional processing for the route optimization, and the communication management method comprises an additional change result receiving step in which the mobile router receives a result of the additional processing for the route optimization, conducted by the access router establishing connection after the movement, from the access router establishing connection after the movement.
With this arrangement, the access router can carry out the further additional change processing for the route optimization for the mobile router and can notify a result of this additional change processing to the mobile router.

Yet moreover, in addition to the aforesaid invention, the communication management method according to the present invention comprises a confidential relationship establishing step in which, after the mobile router establishes a connection with the access router, the mobile router tries to establish a confidential relationship for safe transmission of information with respect to the access router connected.
With this arrangement, the mobile router can safely transmit information on the route optimization.

Furthermore, in addition to the aforesaid invention, the communication management method according to the present invention comprises a normal operation step in which, when in the confidential relationship establishing step the mobile router fails to establish the confidential relationship for the safe transmission of the information with respect to the access router connected, the mobile router itself conducts the route optimization and then conduct an operation according to a conventional technique.
With this arrangement, if difficulty is experienced in safely transmitting the information on the route optimization to the access router, the mobile router can make the switching to conduct an operation for the route optimization by itself and, following this, it can conduct an operation based on a conventional technique.

Still furthermore, in addition to the aforesaid invention, in the communication management method according to the present invention, when the mobile router achieves the establishment of the confidential relationship for the safe transmission of the information with respect to the access router, connected, in the confidential relationship establishing step, the information on the route optimization is transmitted in a safe state on the basis of the confidential relationship between the mobile router and the access router connected.
With this arrangement, the mobile router can safely transmit the information on the route optimization to the access router.

Yet furthermore, in addition to the aforesaid invention, in the communication management method according to the present invention, in the route optimization information reporting step, the mobile router selects a route between the mobile router and the communication node and reports the information on the route optimization relative to the selected route.
With this arrangement, the mobile router can select, from a plurality of routes, a route on a request for the route optimization proxy processing.

In addition, for achieving the above-mentioned purpose, a communication management method according to the present invention, which controls an operation of an access router establishing a connection with a mobile router having a mobile network as a subordinate, comprises:
a route optimization information acquiring step in which the access router acquires information on route optimization relative to a communication node, to which the mobile router conducts the route optimization, from the mobile router connected thereto;
a route optimization information storing step of storing the information on the route optimization for the mobile router; and
a route optimization information transmitting step of transmitting the information on the route optimization for themobilerouter, stored in the route optimization information storing step, to a different access router with which the mobile router establishes a connection after movement.
With this arrangement, the access router can receive the information on the route optimization from the mobile router and passes this information on the route optimization to the access router with which the mobile router establishes a connection after the movement, thereby reducing the information volume of the information on the route optimization to be transmitted when the mobile router establishes a connection with a new access router after the movement and enabling the avoidance of congestion between the mobile router and the access router.

Moreover, combined with the aforesaid invention, in the communication management method according to the present invention, in the route optimization information acquiring step, the access router acquires the information through a message transmitted from the mobile router and addressed to the access router, or it acquires the information through a message having a state where the information is extractable by the access router and transmitted from the mobile router and addressed to a node different from the access router.
With this arrangement, the access router can acquire the information on the route optimization through a specified message sent from the mobile router, or it can receive (intercept) a BU message or the like from the mobile router to extract and acquire the information on the route optimization.

Still additionally, for achieving the above-mentioned purpose, a communication management method according to the present invention, which controls an operation of an access router establishing a connection with a mobile router having a mobile network as a subordinate, comprises:
a route optimization information acquiring step in which the access router acquires information on route optimization for the mobile router from a different access router in connection before movement of the mobile router connected thereto;
a route optimization information storing step of storing the information on the route optimization for the mobile router; and
a route optimization proxy executing step in which the access router conducts proxy processing for the route optimization for the mobile router by use of the information on the route optimization stored in the route optimization information storing step.
With this arrangement, the access router can receive the information on the optimization for the mobile router from the access router with which the mobile router which makes a new connection has made a connection before a change of connection and conduct the proxy processing for the route optimization for the mobile router on the basis of this information on the route optimization, thereby reducing the information volume of information on the route optimization to be transmitted when the mobile router establishes a connection with a new access router after the movement and enabling the avoidance of congestion between the mobile router and the access router.

Moreover, combined with the aforesaid invention, in the communication management method according to the present invention, in the route optimization information acquiring step, the access router acquires the information on the route optimization and identification information for specifying the mobile router before the movement from the different access router to specify the route optimization information on the mobile router connected thereto.
With this arrangement, an access router can appropriately grasp the information on the route optimization for the mobile router received from the access router with which the mobile router to be newly connected has made a connection before the connection change and the association with a subordinate mobile router related to this information on the route optimization.

Still moreover, combined with the aforesaid invention, in the communication management method according to the present invention, a confidential relationship for safe transmission of information is established between the access router and the different access router, and the transmission of the information on the route optimization is made in a safe state on the basis of the confidential relationship between the access router and the different access router.
With this arrangement, the mobile router can safely transmit the information on the route optimization to the access router.

Yet moreover, combined with the aforesaid invention, in the communication management method according to the present invention, in the route optimization information storing step, the access router stores, as the information on the route optimization, identification information on the mobile router, identification information on the mobile network, identification information on a communication node to which the route optimization is made from the mobile router and information to be used for an RR test between the mobile router and the communication node in a state associated with each other.
With this arrangement, the access router can hold information on the execution of the RR test and the transmission of the BU message needed for the proxy processing for the route optimization on the mobile router.

In addition, for achieving the above-mentioned purpose, a communication management device according to the present invention, which is located in a mobile router having a mobile network as a subordinate and made to move while changing a connection with each of a plurality of access routers, comprises:
route optimization information reporting means for, in a state before movement, reporting information on route optimization relative to a communication node, to which the route optimization is conducted, to the access router in connection before the movement; and
proxy requesting means for making a request to the access router in connection before the movement for transmitting the information on the route optimization to the access router establishing connection after next movement so as to enable the access router establishing connection after the movement to carry out proxy processing for the route optimization for the mobile router by use of the information on the route optimization reported by the route optimization information reporting means.
With this configuration, the mobile router can pass the information on the route optimization to the access router connected prior to the movement to reduce the information volume of the information on the route optimization to be transmitted when it establishes a connection with a new access router after the movement, which enables avoiding the congestion between the mobile router and the access router.

In addition, combined with the aforesaid invention, in the communication management device according to the present invention, the route optimization information reporting means carries out the report of the information through the use of a message addressed to the access router in connection before the movement or a message having a state where the information is extractable by the access router in connection before the movement and addressed to a node different from the access router in connection before the movement.
With this configuration, the access router can acquire the information on the route optimization through a specified message sent from the mobile router, or it can receive (intercept) a BU message or the like from the mobile router to extract and acquire the information on the route optimization.

Still additionally, combined with the aforesaid invention, the communication management device according to the present invention comprises execution request transmitting means for, after a connection change is made from the access router in connection before the movement to the access router establishing connection after the movement, making a request for the proxy processing for the route optimization to the access router establishing connection after the movement.
With this configuration, the information on the route optimization is transmitted from the access router connected before the movement to the access router to be connected after the movement, and the mobile router can make a request for the access router connected after the movement to carry out the proxy processing for the route optimization.

Yet additionally, combined with the aforesaid invention, the communication management device according to the present invention comprises route optimization executing means for, after a connection change is made from the access router in connection before the movement to the access router establishing connection after the movement, when grasping the fact that the proxy processing for the route optimization is not conducted by the access router establishing connection after the movement, executing the route optimization by itself.
With this configuration, the mobile router can make the switching to an operation for achieving the route optimization by itself in a case in which the access router connected after the movement cannot conduct the proxy processing for the route optimization.

Moreover, combined with the aforesaid invention, the communication management device according to the present invention comprises result receiving means for, after a connection change is made from the access router in connection before the movement to the access router establishing connection after the movement, receiving, from the access router establishing connection after the movement, a result of the proxy processing for the route optimization conducted by the access router establishing connection after the movement on the basis of the information on the route optimization held in the access router in connection before the movement.
With this configuration, the mobile router can seize the result of the proxy processing for the route optimization conducted by the access router to be connected after the movement.

Still moreover, combined with the aforesaid invention, the communication management device according to the present invention comprises additional change execution judging means for making a judgment as to whether or not a need exists to conduct additional processing for the route optimization.
With this configuration, the mobile router can make a judgment as to whether or not there is a need to carry out additional change processing in addition to the proxy processing for the route optimization conducted by the access router establishing connection after the movement.

Yet moreover, combined with the aforesaid invention, the communication management device according to the present invention comprises additional processing executing means for, when the judgment in the additional change execution judging means shows that a need exists to conduct the additional processing for the route optimization, executing the additional processing for the route optimization by itself.
With this configuration, when the additional change processing is necessary, the mobile router can carry out the additional change processing by itself.

Furthermore, combined with the aforesaid invention, the communication management device according to the present invention comprises additional change information reporting means for, when the judgment in the additional change execution judging means shows that a need exists to conduct the additional processing for the route optimization, reporting information for the additional processing for route optimization to the access router establishing connection after the movement.
With this configuration, when the additional change processing is necessary, the mobile router can notify the information for the additional processing for the route optimization to the access router to make request the proxy of the additional processing for the route optimization.

Still furthermore, combined with the aforesaid invention, in the communicationmanagement device according to the present invention, the additional change information reporting means reports the information with a message addressed to the access router establishing connection after the movement or with a message having a state where the information is extractable by the access router establishing connection after the movement and addressed to a node different from the access router establishing connection after the movement.
With this arrangement, the access router can acquire the additional information on the route optimization through a specified message sent from the mobile router, or it can receive (intercept) a BU message or the like from the mobile router to extract and acquire the information on the route optimization.

Yet furthermore, combined with the aforesaid invention, in the communication management device according to the present invention, the access router establishing connection after the movement is designed to make a judgment as to whether or not a need exists to conduct the additional processing for the route optimization, and the communication management device comprises additional change result receiving means for receiving, from the access router connected after the movement, a result of the additional processing for the route optimization conducted by the access router establishing connection after the movement.
With this arrangement, the access router can carry out the additional change processing for the route optimization for the mobile router and notify the result of this additional change processing to the mobile router.

In addition, combined with the aforesaid invention, the communication management device according to the present invention comprises confidential relationship establishing means for, after the mobile router establishes a connection with the access router, trying to establish a confidential relationship for safely transmitting information with respect to the access router connected.
With this arrangement, the mobile router can safely transmit the information on the route optimization to the access router.

Still additionally, combined with the aforesaid invention, the communication management device according to the present invention comprises means for, when the confidential relationship establishing means fails to establish the confidential relationship for the safe transmission of the information with respect to the access router connected, making the mobile router itself conduct the route optimization and then conduct an operation according to a conventional technique.
With this configuration, if difficulty is experienced in safely transmitting the information on the route optimization to the access router, the mobile router can make the switching to conduct an operation for the route optimization by itself and, following this, it can conduct an operation based on a conventional technique.

Yet additionally, combined with the afore said invention, in the communication management device according to the present invention, when the confidential relationship establishing means achieves the establishment of the confidential relationship for the safe transmission of the information with respect to the access router connected, the information on the route optimization is transmitted in a safe state on the basis of the confidential relation between the mobile router and the access router connected.
With this configuration, the mobile router can safely transmit the information on the route optimization to the access router.

Moreover, combined with the aforesaid invention, in the communication management device according to the present invention, the route optimization information reporting means is made to select a route between the mobile network and the communication node and report the information on the route optimization on the selected route.
With this configuration, the mobile router can select, from a plurality of routes, a route related to the request for the proxy processing for the route optimization.

Furthermore, for achieving the above-mentioned purpose, a communication management device according to the present invention, which controls an operation of an access router establishing a connection with a mobile router having a mobile network as a subordinate, comprises:
a route optimization information acquiring means for acquiring information on route optimization relative to a communication node, to which the mobile router conducts the route optimization, from the mobile router connected to the access router;
a route optimization information storing means for storing the information on the route optimization acquired by the route optimization information acquiring means; and
a route optimization information transmitting means for transmitting the information on the route optimization for the mobile router, stored in the route optimization information storing means, to a different access router with which the mobile router establishes a connection after movement.
With this configuration, the access router can receive the information on the route optimization from the mobile router and passes this information on the route optimization to the access router with which the mobile router establishes a connection after the movement, thereby reducing the information volume of the information on the route optimization to be transmitted when the mobile router establishes a connection with a new access router after the movement and enabling the avoidance of congestion between the mobile router and the access router.

Still furthermore, combined with the aforesaid invention, in the communication management device according to the present invention, the route optimization information acquiring means acquires the information through a message transmitted from the mobile router and addressed to the access router, or it acquires the information through a message having a state where the information is extractable by the access router and transmitted from the mobile router and addressed to a node different from the access router.
With this arrangement, the access router can acquire the information on the route optimization through a specified message sent from the mobile router, or it can receive (intercept) a BU message or the like from the mobile router to extract and acquire the information on the route optimization.

Still furthermore, for achieving the above-mentioned purpose, a communication management device according to the present invention, which controls an operation of an access router establishing a connection with a mobile router having a mobile network as a subordinate, comprises:
a route optimization information acquiring means for acquiring information on route optimization for the mobile router from a different access router in connection before movement by the mobile router connected to the access router;
a route optimization information storing means for storing the information on the route optimization acquired by the route optimization information acquiring means; and
a route optimization proxy executing means for conducting proxy processing for the route optimization for the mobile router by use of the information on the route optimization for the mobile router stored in the route optimization information storing means.
With this configuration, the access router can receive the information on the optimization for the mobile router from the access router with which the mobile router to be newly connected has made a connection before a change of connection and conduct the proxy processing for the route optimization for the mobile router on the basis of this information on the route optimization, thereby reducing the information volume of information on the route optimization to be transmitted when the mobile router establishes a connection with a new access router after the movement and enabling the avoidance of congestion between the mobile router and the access router.

Yet furthermore, combined with the aforesaid invention, in the communication management device according to the present invention, the route optimization information acquiring means acquires the information on the route optimization and identification information for specifying the mobile router before the movement from the different access router to specify the route optimization information for the mobile router connected thereto.
With this configuration, an access router can appropriately grasp the information on the route optimization for the mobile router received from the access router with which the mobile router to be newly connected has made a connection before the connection change and the association with a subordinate mobile router related to this information on the route optimization.

Moreover, combined with the aforesaid invention, in the communication management device according to the present invention, a confidential relationship for safe transmission of information is established between the access router and the different access router, and the transmission of the information on the route optimization is made in a safe state on the basis of the confidential relationship between the access router and the different access router.
With this configuration, the mobile router can safely transmit the information on the route optimization to the access router.

Still moreover, combined with the aforesaid invention, in the communication management device according to the present invention, as the information on the route optimization, identification information on the mobile router, identification information on the mobile network, identification information on a communication node to which the route optimization is made from the mobile router and information to be used for an RR test between the mobile router and the communication node are stored in the route optimization information storing means in a state associated with each other.
With this configuration, the access router can hold information on the execution of the RR test and the transmission of the BU message needed for the proxy processing for the route optimization on the mobile router.

In addition, for achieving the above-mentioned purpose, a communication management method according to the present invention, which controls an operation of a mobile node moving while changing a connection with each of a plurality of access routers, comprises:
a route optimization information reporting step in which, in a state before movement, the mobile node reports information on route optimization relative to a communication node, to which the route optimization is conducted, to a predetermined network; and
a request proxy step of, when the mobile node then changes the access router, making a request to the predetermined network node for conducting proxy processing for the route optimization for the mobile node by use of the information on the route optimization.
With this arrangement, the mobile node can pass the information on the route optimization to a predetermined network node (for example, home agent), thereby reducing the information volume of the information on the route optimization to be transmitted at a connection to a new access route after movement, which enables avoiding the congestion between the mobile node and the access router.

Still additionally, for achieving the above-mentioned purpose, a communication management method according to the present invention, which controls an operation of a predetermined network node made to conduct proxy processing for a mobile node connected to an access router, comprises:
a route optimization information acquiring step of acquiring information on route optimization relative to a communication node, to which the mobile node conducts the route optimization, from the mobile node connected to the access router;
a route optimization information storing step of storing the information on the route optimization for the mobile router; and
a route optimization proxy processing step of, when the mobile node establishes a connection with a different access router after movement, conducting proxy processing for the route optimization for the mobile node by use of the information on the route optimization for the mobile node stored in the route optimization information storing step.
With this arrangement, a predetermined network node (for example, home agent) can receive the information on the route optimization from a mobile router to carry out the proxy processing for the route optimization for the mobile node on the basis of this information on the route optimization, thereby reducing the information volume of the information on the route optimization to be transmitted when the mobile node establishes a connection to a new access route after movement, which enables avoiding the congestion between the mobile node and the access router.

Yet additionally, for achieving the above-mentioned purpose, a communication management device according to the present invention, which is located in a mobile node moving while changing a connection with each of a plurality of access routers, comprises:
route optimization information reporting means for, in a state before movement, reporting information on route optimization relative to a communication node, to which the route optimization is conducted, to a predetermined network; and
request proxy means for, when the mobile node then changes the access router, making a request to the predetermined network node for conducting proxy processing for the route optimization for the mobile node by use of the information on the route optimization.
With this configuration, the mobile node can pass the information on the route optimization to a predetermined network node (for example, home agent), thereby reducing the information volume of the information on the route optimization to be transmitted at a connection to a new access route after movement, which enables avoiding the congestion between the mobile node and the access router.

Furthermore, for achieving the above-mentioned purpose, a communication management device according to the present invention, which controls an operation of a predetermined network node made to conduct proxy processing for a mobile node connected to an access router, comprises:
a route optimization information acquiring means for acquiring information on route optimization relative to a communication node, to which the mobile node conducts the route optimization, from the mobile node connected to the access router;
a route optimization information storing means for storing the information on the route optimization for the mobile node; and
a route optimization proxy processing means for, when the mobile node establishes a connection with a different access router after movement, conducting proxy processing for the route optimization for the mobile node by use of the information on the route optimization for the mobile node stored in the route optimization information storing means.
With this arrangement, a predetermined network node (for example, home agent) can receive the information on the route optimization from a mobile router to carry out the proxy processing for the route optimization for the mobile node on the basis of this information on the route optimization, thereby reducing the information volume of the information on the route optimization to be transmitted when the mobile node establishes a connection to a new access route after movement, which enables avoiding the congestion between the mobile node and the access router.

The communication management method and communication management device according to the present invention have the above-described arrangements, which provide the advantages of reducing the information volume to be transmitted through radio communication between a mobile node and an access router for avoiding the congestion between the mobile node and the access router.

### BRIEF DESCRIPTION OF THE DRAWINGS

[FIG. 1] is a block diagram showing one configuration example of a communication system according to an embodiment of the present invention.
[FIG. 2] is a block diagram showing one example of a configuration of an MR according to an embodiment of the present invention.
[FIG. 3] is a block diagram showing one example of a configuration of an AR according to an embodiment of the present invention.
[FIG. 4] is a flow chart showing one example of an operation of an MR according to an embodiment of the present invention.
[FIG. 5] is a flow chart showing one example of an operation of an AR according to an embodiment of the present invention.
[FIG. 6] is a block diagram showing one configuration example of a communication system according to another embodiment of the present invention.

### BEST MODE FOR CARRYING OUT THE INVENTION

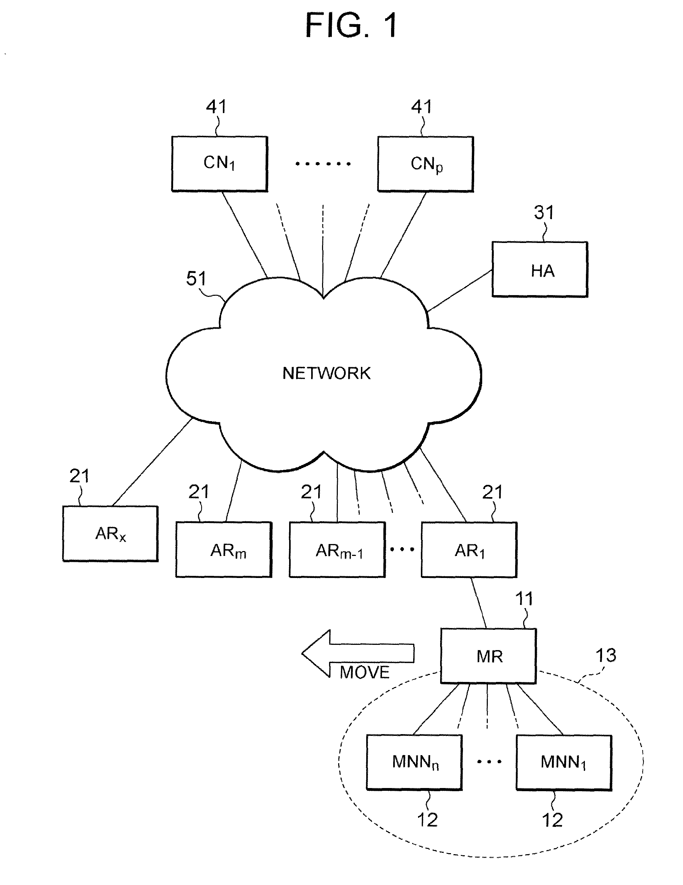

Embodiments of the present invention will be described hereinbelow with reference to the drawings. First of all, a description will be given of a configuration example of a communication system according to an embodiment of the present invention. FIG. 1 is a block diagram showing one configuration example of a communication system according to an embodiment of the present invention.

In FIG. 1, there are shown a mobile router (MR) 11, mobile network nodes (MNN) 12 (two: MNN₁ and MNNₙ in FIG. 1), mARs 21 (three: AR₁, ARₘ₋₁, ARₘ in FIG. 1) mutually having a confidential relationship with each other, an AR 21 (ARₓ in FIG. 1) which does not have a confidential relationship with the mARs 21 (three: AR₁, ARₘ₋₁, ARₘ in FIG. 1) mutually having a confidential relationship with each other, an HA 31 of the MR 11, p CNs 41 (two: CN1, CNp in FIG. 1) which are communication partners of the HA 31 of the MR 11 and MMN 12, and a network 51 with which the AR 21, the HA 31 and the CN 41 are in connection.

The MR 11 packages protocols related to the NEMO and others and is a mobile node capable of realizing a movement management function as a proxy for the MNN 12 existing in each of mobile networks 13 as a subordinate under it. The MR 11 carries out the processing for movement in units of the mobile network 13, and each of the MNNs 12 can secure the connectivity to the network 51 existing at an upper position of the MR 11 without paying attention to the movement of connection (i.e., without packaging a movement management function or conducting execution for each movement of the mobile network). In the present invention, the MR 1 1 carries out the route optimization (which will hereinafter be referred to as RO) with respect to the CN 41 and, hence, packages the mobile IPv6 having an RO function. Moreover, the MNN 12 is a network node existing in the mobile network 13 under the MR 11. Still moreover, although only one mobile network 13 is shown as a subordinate of the MR 11 in FIG. 1, there is a case in which a plurality of mobile networks exist therein.

The AR 21 is connected to the network 51 and forms a subnet with which mobile nodes such as the MR 11 and an MH (Mobile Host) are connectable, and it is capable of providing the connectivity with the network 51 to the mobile nodes connected to the subnet.

Moreover, a plurality of ARs 21 (AR₁ to ARₘ) having a confidential relationship with each other are in confidential relationship with each other and are made to enable mutual information exchange while maintaining a secure state. In this connection, it is also acceptable that the confidential relationship among the ARs 21 (AR₁ to ARₘ) is established (confirmed) at every information exchange, or that it is established in advance through the exchange of keys or the like. In addition, the confidential relationship among the ARs 21 (AR₁ to ARₘ) can also be established, for example, by use of IPsec (IP security Protocol) or the other security technology.

The respective subnets of the plurality of ARs 21 having a confidential relationship with each other are located to be adjacent geographically to each other, and it is preferable that moving mobile nodes are made to be capable of continuously carrying out the connection change among the plurality of ARs 21 having a confidential relationship with each other. As one example of such location, there are subnets established along the trajectory of a mobile body. In addition to the plurality of ARs 21 having a confidential relationship with each other, there is a case in which an AR 21 (ARₓ) having no confidential relationship exists in a state adjacent to one of the plurality of ARs 21. This Arₓ is an AR having a different confidential relationship with an AR based on a conventional technique or an AR different from the AR₁ to ARₘ.

The HA 31 is a home agent of the MR 11 and holds positional information related to the MR 11 (concretely, HoA and CoA of the MR 11 and prefix information of the mobile network 13 of the MR 11) and receives (intercepts) a packet in which set is a destination address containing a prefix of a mobile network for the tunneling to the MR 11.

The CN 41 is an arbitrary communication node connected to the network 51 and becomes a communication partner of the MR 11 or the MNN 12. In the present invention, for carrying out the RO with respect to the MR 11, for example, the CN 41 contains a mobile IPv6 having an RO function. Moreover, the network 51 is an arbitrary packet switching network represented by the internet or the like.

Following this, with reference to FIG. 1, a description will be given hereinbelow of the outline of an embodiment of the present invention. In the present invention, the AR 21 connected to the MR 11 is made to carry out, as the proxy for the MR 11, the RO to be established between the MR 11 and the CN 41. The RO to be conducted by the AR 21 as the proxy for the MR 11 will be referred to as a proxy RO.

When the MR 11 moves and establishes a connection with a new AR 21, this proxy RO is conducted by the new AR 21. At this time, the new AR acquires information (information on the RO), which is used for carrying out the proxy RO instead of the MR 11, from the AR 21 with which the MR 11 has made a connection before movement, thus reducing the processing load on the MR 11 and further decreasing the traffic between the MR 11 and the AR 21.

This information on the RO is information for specifying the MR 11 to be connected newly to carry out the RO instead of this MR 11, such as information (for example, the address of the CM 41) for specifying the CN 41, information (for example, an HoK or CoK of an RR test, Auth in a BU message, and others) which has been used in the RO established between the MR 11 and the CN 41) and information (for example, an HoK or CoA of the MR 11) for specifying the MR 11. This information on the RO can include information for identifying each of a plurality of networks 13 under the MR 11, and it can include detailed connection setting information (for example, a parameter of QoS, authentication information) between each of the mobile networks 13 and each of the CNs 41, and other information.

The Auth contained in the BU message is information generated on the basis of the HoK and the CoK, and upon receipt of the HoK and the CoK, the AR 21 generates the Auth of the BU message, thereby enabling the implementation of the BU. Moreover, it is preferable that, for example, the AR 21 with which the MR 11 establishes a connection after movement acquires, from the AR 21 with which the MR 11 has established a connection before the movement, information other than the above-mentioned information, such as confidence information (key information) used for establishing the confidential relationship between the MR 11 and the AR before the movement.

Moreover, the MR 11 is capable of carrying out the RO with respect to a plurality of CNs 41. Accordingly, there is a need to manage the information on the RO with respect to each of the plurality of CNs 41. Concretely, a set of the address of each of the plurality of CNs 41 on which the MR 11 conducts the RO and an HoK or CoK used for the RR test is managed as the information on the RO between the MR 11 and a specified CN 41. Inaddition, the priority of the RO relative to each of the CNs 41 and the operation start timing of the RO are set as the information on the RO, and the AR 21 which carries out the proxy RO can refer to these priority and operation start timing so as to first conduct the proxy RO with respect to the CN 41 having a high priority and then carry out the proxy RO with respect to the CN 41 having a low priority in a stepwise fashion.

Still moreover, the MR 11 can pass the information on the RO relative to only a portion of the plurality of CNs 41, to which the RO is conducted, to the AR 21 and conduct the RO by itself with respect to the remaining CNs 41. That is, the MR 11 can make a selection between the CNS 41 on which the AR 21 carries out the proxy RO and the CNS 41 on which the MR 11 itself conducts the RO.

The AR 21 with which the MR 11 has made a connection before the movement previously acquires and holds the information on the RO for the MR 11 through, for example, device such as the information report from the MR 11 and the information extraction from a packet transmitted from the MR 11. Moreover, when the AR 21 with which the MR 11 has made connection before the movement passes the information on the RO for the MR 11 to a different new AR 21 for the MR 11, for example, in response to a request from the AR 21, with which the MR 11 establishes a connection after the movement, or in advance, the AR 21 with which the MR 11 establishes a connection after the movement can acquire the information on the RO related to the MR 11 without using the radio communication with the MR 11.

The exchange of information on the RO related to the MR 11 between the ARs 21 is required to be conducted safely between the ARs 21 (AR₁ co ARₘ) having a confidential relationship. Incidentally, also in a case in which the delivery of the information on the RO is feasible among the ARs 21 through a roaming agreement or the like, the ARs 21 have a confidential relationship with each other.

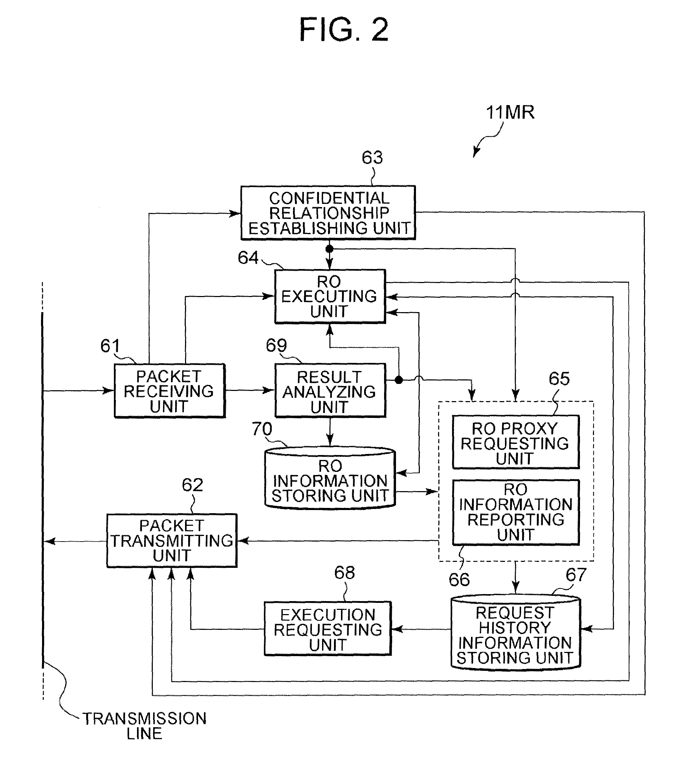

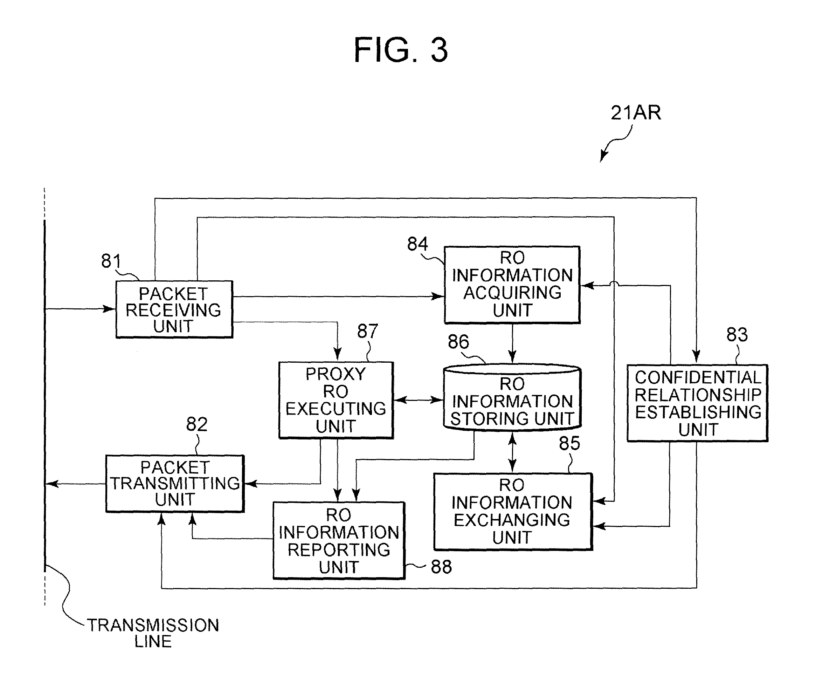

A detailed and concrete description will be given hereinbelow of a configuration and operation according to the present invention. First of all, a description will be given of an example of concrete configurations of the MR 11 and the AR 21 according to the present invention. FIG. 2 is a block diagram showing one example of a configuration of an MR according to an embodiment of the present invention, and FIG. 3 is a block diagram showing one example of a configuration of an AR according to an embodiment of the present invention.

One example of a configuration of the MR 11 will first be described with reference to FIG. 2. The MR 11 shown in FIG. 2 includes a packet receiving unit 61, a packet transmitting unit 62, a confidential relationship establishing unit 63, an RO executing unit 64, an RO proxy requesting unit 65, an RO information reporting unit 66, a request history information storing unit 67, an execution requesting unit 68, a result analyzing unit 69 and an RO information storing unit 70.

In FIG. 2, the packet receiving unit 61 and the packet transmitting unit 62 have packet reception and transmission functions through transmission lines (ratio transmission paths), respectively, with the exchange of a packet being made through the packet receiving unit 61 and the packet transmitting unit 62 with respect to the AR 21.

The confidential relationship establishing unit 63 shown in FIG. 2 has a function to establish a confidential relationship relative to the AR 21 for the purpose of protecting a packet in the transmission lines. In the case of the establishment of the confidential relationship with the AR 21, the result of the establishment of the confidential relationship therebetween is reported from the confidential relationship establishing unit 63 to the RO proxy requesting unit 65 and the RO information reporting unit 66. On the other hand, in the case of no establishment of the confidential relationship therebetween, this result is notified from the confidential relationship establishing unit 63 to the RO executing unit 64.

The RO executing unit 64 shown in FIG. 2 has a function to execute an RO with respect to the CN 41. For example, the RO executing unit 64 carries out an RR test relative to the CN 41 and transmits a BU message to the CN 41. In addition, the RO executing unit 64 can send the information on the RO carried out with respect to the CN 41 and the information (request history information) indicative of the request history to the RO information storing unit 70 and the request history information storing unit 67, or it can refer to the information on the RO and the request history information respectively stored in the RO information storing unit 70 and the request history information storing unit 67 to conduct additional change processing for the RO.

The RO proxy requesting unit 65 shown in FIG. 2 has a function to make a request to the AR 21 which is in the connection before the movement, the AR 21 which is to be connected after the next movement or the AR which has been connected after the movement so that the AR 21 to be connected after the next movement carries out the proxy RO with respect to the CN 41. In this specification, the request signifies a request for instead conducting the RO processing or other processing subsequent thereto to the AR 21 (more concretely, to one of or both a cAR and nAR which will be mentioned later). Since, at the request for the proxy RO, the information on the RO is exchanged with respect to the AR which is in connection prior to the movement, it is preferable that the request for the proxy RO is made only when the confidential relationship with the AR 21 in connection before the movement has been established by the confidential relationship establishing unit 63.

The RO information reporting unit 66 shown in FIG. 2 has a function to report the information on the RO to the AR 21 at a request for the proxy RO or report difference information on additional change processing for the RO conducted by itself in the RO executing unit 64. The report of the information on the RO can also be made with a message such as a BU message, which is not directed to the AR 21, as mentioned later. Moreover, it is also possible that the request for the proxy RO is made by the report of the information on the RO. In this case, the function of the RO proxy requesting unit 65 is contained in the RO information reporting unit 66. The RO information reporting unit 66 can also select a route between the mobile network 13 and the CN 41 to report only the information on the RO on the selected route and, further, it can also selectively report a predetermined parameter of each route. Still moreover, the history of the report of the information on the RO in the RO information reporting unit 66 is stored in the request history information storing unit 67.

The request history information storing unit 67 in FIG. 2 has a function to store, as request history information, a history related to the request for the proxy RO by the RO proxy requesting unit 65 and a history of the report of the information on the RO by the RO information reporting unit 66.

The execution requesting unit 68 in FIG. 2 has a function to make a request for the execution of the proxy RO to the AR 21. In this specification, the execution request signifies indicating the execution of predetermined processing immediately, and the means which has received the execution request for the predetermined processing is required to carry out the predetermined processing immediately. For example, after the connection to a new AR 21, the execution requesting unit 68 makes the execution request for the proxy RO to this new AR 21 or makes the execution request for additional change processing for the RO. Moreover, the execution requesting unit 68 can also transmit an execution request whereby the proxy RO is conducted selectively with respect to only a portion of the routes between the mobile network 13 and the CN 41. Incidentally, in a case in which the proxy RO for the MR 11 is conducted immediately after the AR 21 has detected the connection with the MR 11, there is no need for the MR 11 which transmits the proxy RO execution request from the execution request unit 68.

The result analyzing unit 69 in FIG. 2 has a function in which, upon receipt of a result of the proxy RO by the AR 21, this result is analyzed to examine the need for additional change processing. In a case in which a judgment shows the need for the additional change processing, for example, an execution instruction for the additional change processing is sent from the result analyzing unit 69 to the RO executing unit 64 and the RO information reporting unit 66, and the additional change processing is conducted by the RO executing unit 64 and the RO information reporting unit 66. Moreover, the result of the proxy RO by the AR 21 is stored as the information on the RO in the RO information storing unit 70.

As one example of the case that the judgment shows the need for the additional change processing, for example, there is a case in which the lifetime of a CoK or BU expires (or approaches the expiration). In this case, there are conducted additional change processing such as the processing for the updating of the CoK or BU and the processing for the prolongation of the lifetime.

The RO information storing unit 70 in FIG. 2 has a function to store the information on the RO contained in the result of the proxy RO conducted by the AR 21 and the information on the RO the MR has conducted by itself.

Furthermore, one example of a configuration of the AR 21 will be described hereinbelow with reference to FIG. 3. The AR 21 shown in FIG. 3 includes a packet receiving unit 81, a packet transmitting unit 82, a confidential relationship establishing unit 83, an RO information acquiring unit 84, an RO information exchanging unit 85, an RO information storing unit 86, a proxy RO executing unit 87 and an RO information reporting unit 88.

In FIG. 3, the packet receiving unit 81 and the packet transmitting unit 82 have functions to make packet reception and transmission through transmission lines, respectively, with the packet exchange being made through the packet receiving unit 81 and the packet transmitting unit 82 with respect to the MR 11 connected as a subordinate or an arbitrary CN 41 connected to the network 51.

The confidential relationship establishing unit 83 shown in FIG. 3 has a function to establish a confidential relationship between the MR 11 and each of other ARs 21 for the purpose of protecting a packet in the transmission lines. A result indicative of whether or not the confidential relationship has been established with respect to the MR 11 is reported from the confidential relationship establishing unit 83 to the RO information acquiring unit 84. Moreover, a result indicative of whether or not the confidential relationship has been established with respect to the other AR is reported from the confidential relationship establishing unit 83 to the RO information exchanging unit 85.

The RO information acquiring unit 84 in FIG. 3 has a function to acquire the information on the RO from the MR 11. The information on the RO for the MR 11 acquired from the MR 11 by the RO information acquiring unit 84 is stored in the RO information storing unit 86. For example, the report of the information on the RO from the MR 11 is made with a predetermined message directed at the AR 21 , and it is also acceptable that the RO information acquiring unit 84 extracts the information from the predetermined message or that the RO information acquiring unit 84 extracts the information on the RO from an HoTI message or BU message transmitted from the MR 11 to another communication node (for example, the HA 31 of the MR 11). In a case in which a confidential relationship is not established with respect to the MR 11, it is preferable that the RO information acquiring unit 84 does not acquire the information on the RO.

The RO information exchanging unit 85 in FTG. 3 has a function to exchange the information on the RO for the MR 11 with respect to the other AR 21. The information on the RO related to the MR 11 acquired from the other AR 21 by this RO information exchanging unit 85 is stored in the RO information storing unit 86. In a case in which the transmission of the information on the RO for the MR 11 is made with respect to the other AR 21, it is also acceptable to actively pass the information on the RO to the other AR 21, select the AR 21, to which the information on the RO is to be passed, from a plurality of ARs 21 on the basis of the movement prediction of the MR 11 or the advance report from the MR 11, or passively pass the information on the RO for a specified MR 11 to the other AR 21 upon receipt of a request from the other AR 21. Incidentally, it is preferable that the RO information exchanging unit 85 does not made the exchange of the information on the RO with respect to the other AR 21 having no confidential relationship.

The RO information storing unit 86 in FIG. 3 has a function to store the information on the RO acquired from the MR 11 by the RO information acquiring unit 84, the information on the RO acquired from the other AR 21 by the RO Information exchanging unit 85 and the information on the RO generated when the proxy RO executing unit 87 has carried out the proxy RO.

The proxy RO executing unit 87 in FIG. 3 has a function to carry out the proxy RO instead of the MR 11 by use of the information on the RO for the MR 11 stored in the RO information storing unit 86 in the case of the reception of an execution request for a proxy RO from the MR 11, when a need exists to update the information on the RO, in the case of a detection of a connection of the MR 11 or in other cases.

Moreover, for example, in a case in which new information on an RO is generated when the proxy RO executing unit 87 has carried out the proxy RO, the RO information reporting unit 88 fulfills a function to notify the new information on the RO to the MR 11. Still moreover, the RO information reporting unit 88 can also notify the execution result of the proxy RO, conducted by the proxy RO executing unit 87, to the MR 11.

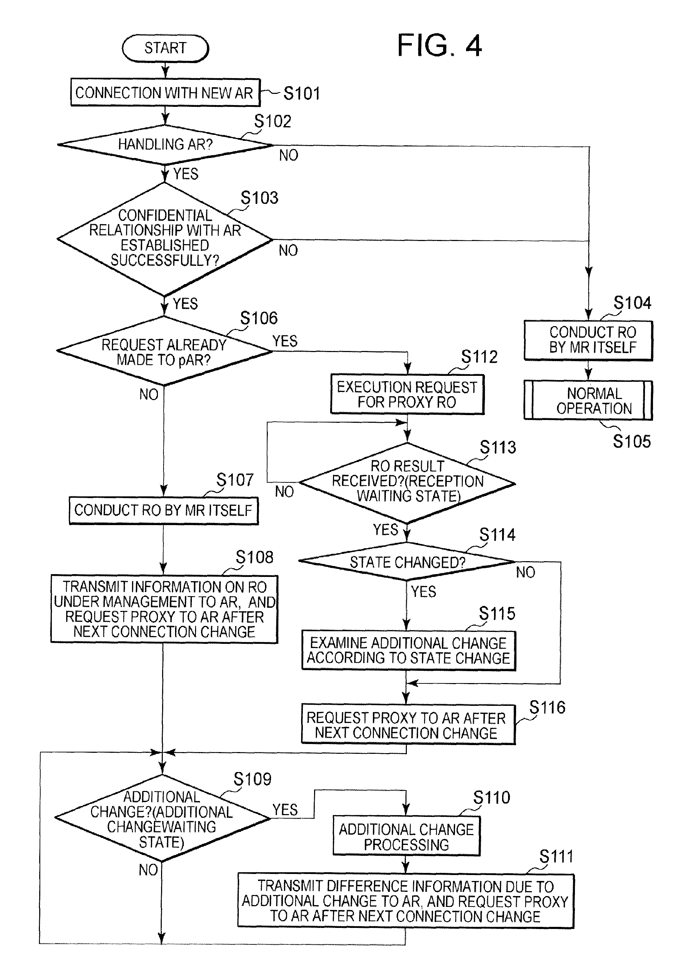

Secondly, a description will be given of one example of an operation of the MR 11 according to an embodiment of the present invention. FIG. 4 is a flow chart showing one example of an operation of an MR according to an embodiment of the present invention.

First of all, the MR 11 makes a connection with an AR 21 to secure the connectivity to the AR 21 and the network 51 (step S101: connection with a new AR). According to the processing in this step 101, the same processing as the conventional processing to be conducted when the MR 11 establishes a connection with the AR 21 is carried out, for example, the MR 11 receives an RA (Router Advertisement) from the AR 21 to acquire a CoA related to a subnet of the AR 21 for carrying out the BU with respect to the HA 31.

Moreover, the MR 11 confirms whether or not the AR 21 is a handling AR handling the present invention (AR capable of carrying out the processing according to the present invention) on the basis of the information reported from the AR 21 or through an inquiry to the AR 21 (step A102: handling AR?). In the processing of the step S102, for example, in a manner such that the MR 11 confirms whether or not a bit indicative of the handling of the present invention exists in an RA received from the AR 21 or it transmits a message for issuing an inquiry about the handling of the present invention, it is possible to grasp whether or not the AR 21 connected is a handling AR.

Incidentally, the processing in the step S102 is not always required to be conducted, and the MR 11 can grasp the fact that the AR 21 connected is not a handling AR at the time that, during an operation which will be described hereinbelow, an error message is returned which is indicative of the difficulty of recognition of a message transmitted from the MR 11.

In a case in which the AR 21 is a handling AR ("YES" in the step S102), the MR 11 establishes a confidential relationship relative to the AR 21 (step S103: the confidential relationship with AR established successfully?). Incidentally, the establishment of the confidential relationship between the MR 11 and the AR 21 is not necessarily limited to unique special processing of the present invention but it is also acceptable to utilize the confidential relationship between the MR 11 and the AR 21 established according to a conventional technique. Moreover, At the establishment of the confidential relationship in the step S103 or in other states, it is necessary that the MR 11 transmits the information capable of uniquely identifying the MR 11 after the movement (for example, information indicative of the association between the CoA which has been used before the connection change and the CoA to be used after the connection change) to the AR 21 and the AR 21 (which will be referred to hereinafter to cAR) with which the MR 11 is presently in connection after the movement acquires the information on the RO for this MR 11 from the AR 21 (which will be referred to hereinafter to pAR) with which the MR 11 has made connection before the movement.

The information on the RO (i.e., information on the BU and others) is important information. Therefore, not only there is a need to exchange the information on the RO safely between the MR 11 and the AR 21, but also there is a need for the MR 11 to be capable of confirming that the AR 21 is reliable and the delivery of the information on the RO thereto is acceptable. A concrete device whereby the MR 11 confirms the confidence of the AR 21, for example, there is the addition of a certificate information from a predetermined management party to the information to be reported from the AR 21 to the MR 11, or the like. That is, it is also acceptable that the MR checks the certificate information added to the information passed from the AR 21 for confirming that the AR 21 is proper (reliable).

On the other hand, if the AR 21 is not a handling AR ("NO" in the step S102), the execution of the processing according to the present invention is impossible. In this case, the MR 11 carries out the RO (step S104: MR itself conducts RO) and subsequently conducts the processing based on a conventional technique (step S105: normal operation), thereby enabling the achievement of the RO without creating any problem. Moreover, in a case in which difficulty is experienced in establishing the confidential relationship between the MR 11 and the AR 21 ("NO" in the step S103), it is preferable that the AR 21 does not carry out the RO as the proxy for the MR 11 and, as well as the case in which the AR 21 is not a handling AR, it is desirable that the MR 11 conducts the processing based on the conventional technique after conducting the RO by itself.

In a case in which the establishment of the confidential relationship reaches success between the MT 11 and the AR 21 ("YES" in the step S103), the MR 11 confirms whether or not a request has been made to the pAR so that the AR (i.e., cAR) with which the MR 11 will establish a connection at the next movement at the time of the previous connection conducts the RO as the proxy for the MR 11 (step S106: a request already made to pAR?). This request corresponds to a case in which the processing in a step S108 or step S111, mentioned later, is conducted at the connection to the pAR. For example, this confirmation in the step S106 is realizable in a manner such that the MR 11 previously stores request history information at the connection with the pAR (concretely, history related to the processing in the step S108 or step S11, mentioned later, at the connection to the pAR) and confirms this request history information.

In a case in which, through the confirmation in the step S106, the MR 11 gasps that the MR 11 does not make a request to the pAR so that the cAR carries out the RO as the proxy for the MR 11 ("NO" in step S106), the MR 11 itself carries out the RO (step S107: MR itself conducts RO). The RO processing conducted in the step S107 is the same as that conventional RO processing, and the MR 11 executes an RR test and BU with respect to the CN 41. The MR 11 conducts the BU successively relative to the respective CNs 41, and with respect to whether or not to conduct this processing or when to carry out it, the MR 11 can determine them. At this time, it is preferable that the MR 11 prevents the congestion of information from occurring at the information exchange on the RO. It is also acceptable that, for example, the RO priority and the operation start timing are determined on the basis of an agreement with the MNN 12, a communication situation (i.e., whether the MNN 12 is a local node or visitor node, a cost paid by a contractor for making a contract with a service, a QoS assurance related to communication by the MNN 12) or the like, while random determination thereof is also acceptable.

As a case in which the MR 11 itself carries out the RO in the step S107, for example, there is considered a case in which the MR 11 first establish a connection with a handing AR after the turning-on of the power source for the MR 11 (that is, when the above-mentioned cAR is an AR with which the MR 11 first establishes a connection), a case in which the pAR is not a handling AR, or the like. In this case, in the step S107, although the MR 11 can make a request for the proxy for the RO by handing over the information on the RO to the cAR, it is desirable that the MR 11 itself carries out the RO as mentioned above.

Furthermore, the MR 11 which has conducted the RO by itself with respect to the CN 41 transmits the RO under management thereof to the cAR and, with respect to the processing for the RO, makes a request for the proxy for the RO in a case in which the MR 11 establishes a connection with a new AR 21 (which will hereinafter be referred to as nAR) after the next movement (step S108): transmit information on RO under management to an AR and make a request for proxy to the AR after next connection change).

The transmission on the RO and the request for the proxy in the step S108 can be made at an arbitrary time point of the time that the MR is in connection with the cAR. Moreover, in a case in which the AR 21 is designed to carry out the proxy RO without receiving a request from the MR 11, the requirement to the MR 11 is only handing over the information on the RO to the AR 21, and there is no need for the MR 11 to explicitly make a request for the proxy. This case signifies that the transmission of the information on the RO from the MR 11 to the AR 12 doubles as the request for the proxy RO to the AR 21 by the MR 11.

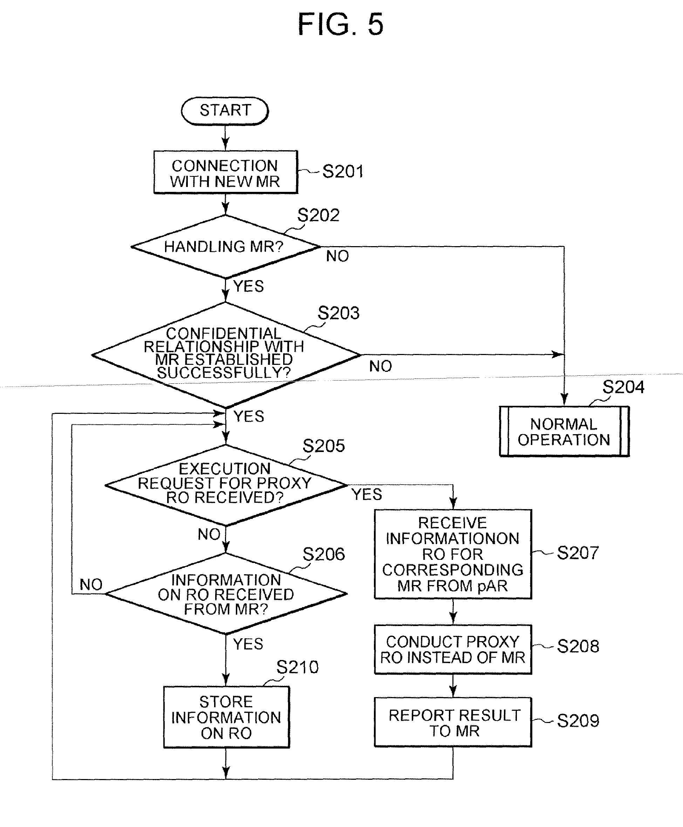

In addition, for example, the information on the RO transmitted from the MR 11 to the cAR is passed to the nAR in a step S207 which will be described later with reference to FIG. 5, so the nAR can carry out the proxy RO as the proxy for the MR 11.

As the information on the RO to be transmitted from the MR 11 to the cAR in the step S108, for example, in a case in which the MR 11 contains both protocols related to the mobile IP and the NEMO, there is information needed when the MR 11 carries out the RR test and the BU. In this case, concretely, the information on the RO are information (for example, the HoK or CoA of the MR 11) for the AR 21 to uniquely recognize the MR 11 itself, an address of each CN 41 which conducts the RO, an HoK corresponding to each CN 41, and others.

Through the above-mentioned processing up to the step S108, the MR 11 itself completes the RO with respect to each CN 41 and the information on the RO conducted by the MR 11 is passed to the cAK. Following this, the MR 11 is placed into an event waiting state until the need for some additional change takes place (step S109: additional change made? (additional change waiting state)).

In addition, in a case in which an event related to the additional change has occurred ("YES" in step S109), the MR 11 itself carries out the processing for this additional change (step S110: additional change processing), and further transmits difference information on the information on the RO updated by this additional change processing to the cAR and, on the basis of the information on the RO reflecting this difference information, makes a request for the proxy RO in a case in which the MR 11 establishes a connection with the nAR after the next movement (step S111: the difference information related to the additional change is transmitted to the AR to make a request for the proxy to the AR after the next connection change), then entering an event waiting state related to the additional change. With respect to the request for the proxy RO in the step S111, as in the case of the step S108, for example, in a case in which the AR 21 is designed to carry out the proxy RO without receiving a request from the MR 11, the requirement to the MR 11 is only handing over the information on the RO to the AR 21, and there is no need for the MR 11 which explicitly makes a request for the proxy.

in this connection, as an event related to the additional change, for example, there is the execution of a new RO, the updating of a route where the RO has reached completion, or the like. The execution of the new RO includes, for example, an execution of an RO relative to a new CN 41, an execution of an RO between a new mobile network 13 and the CN 41, and others. Moreover, the updating of a route where the RO has reached completion includes, for example, a case of the updating of an HoK or CoK when the term of validity of the HoK or CoK for use in the RR test expires, a case in which a BU is again transmitted to the HA 31 or the CN 41 before the expiration of the lifetime of the binding information registered in the HA 31 or the CN 41, and others.

Furthermore, in this processing, when an event related to the additional change has occurred, the MR 11 itself conducts the additional change processing in the step S110 and passes the difference information to the cAR in the step S111. On the other hand, with respect to an event (particularly, updating of the route in which the RO has reached completion) related to such additional change, the MR 11 can also make a request for the proxy for the processing to the cAR (and nAR after the next movement). In this case, although it is preferable that the cAR and the nAR report the execution result of the additional change processing (difference information stemming from the additional change) to the MR 11 in each case so that the MR 11 and the cAR accomplish the synchronization between the information on the RO they have, there is a possibility that the traffic increases between the MR 11 and the AR 21 in such a means. The flow chart shown in FIG. 4 shows, as a means different from the above-mentioned means, the processing (concretely, the processing in a step S113, which will be mentioned later) by a means which receives a result of the RO including an execution result of the additional change processing by the pAR when the MR 11 establishes a connection with the cAR. Incidentally, in a case in which the AR 21 is made to perform the proxy for an event related to the additional change, the AR 21 can make the proxy for the generation and updating with respect to the CoK. However, with respect to the HoK, as mentioned later, if there is no confidential relationship, for example, between the AR 21 and the HA 31, it is impossible that the AR 21 makes the proxy for the generation and updating of the HOK.

On the other hand, in the case of grasping, through the confirmation in the step S106, that the request has already been made to the pAR so that the cAR carries out the RO as the proxy for the MR 11 ("NO" in step S106), the MR 1 transmits a proxy RO execution request to the cAR (step S112: proxy RO execution request) and enters a reception waiting state for receiving an execution result of the proxy RO by the cAR (step S113: RO result received? (reception waiting state)). In a case in which the cAR detects the connection with the MR 11 without receiving the proxy RO execution request from the MR 11, the cAR can be designed to start the proxy RO by itself as the proxy for the MR 11. In this case, there is no need for the MR 11 to explicitly transmit the proxy RO execution request to the cAR.

At this time, since the cAR carries out the proxy RO on the basis of the information on the RO passed from the pAR, the execution result of the proxy RO the MR 11 receives in the step S113 reflects the additional change processing for the proxy RO conducted by the pAR. Therefore, instead of the execution result of the additional change processing being reported to the MR 11 by the AR 21 in each case as mentioned above, the MR 11 receives the execution result of the proxy RO conducted by the cAR on the basis of the information on the RO reflecting the execution result of the additional change processing conducted by the pAR, thereby achieving the synchronization of the information on the RO between the MR 11 and the cAR. That is, the synchronization of the information on the RO between the MR 11 and the AR 21 can be made one by one or it can also be performed at a predetermined timing (in this case, at a new connection to the cAR by the MR 11).

Moreover, upon receipt of the result of the proxy RO from the cAR, the MR 11 stores this proxy RO result and confirms, for example, whether or not some variation (difference) has occurred from the state of the RO at the connection with the pAR (step S114; state variation?). The above-mentioned variation of the state signifies a difference between the state of the RO at the connection with the pAR and the state of the execution result of the RO conducted newly by the cAR and, concretely, it means an event that, although the RO has been conducted relative to a predetermined CN 41 at the connection with the pAR, the RO relative to this predetermined CN 41 has failed in the case of the proxy RO by the cAR, or other cases.

Incidentally, as the result of the proxy RO the MR 11 receives from the cAR, there is a possibility of a case of the reception of a result that the cAR cannot carry out the RO at all. As such a case, for example, considered is a case in which the cAR cannot receive the information on the RO from the pAR. Concretely, considered is a case in which the communication between the pAR and the cAR is disconnected for some trouble, a case in which, although both the pAR and the cAR are a handling AR, no confidential relationship exists between the pAR and the cAR (that is, the MR 11 moves to an AR 21 having no confidential relationship with the AR 21) and the cAR cannot receive the information on the RO from the pAR, or the like.

Moreover, preferably, as the result of the proxy RO, the MR 11 not only receives the simple information on the success/failure of the proxy relative to each CN 41 but also receives, from the cAR, for example, the CoK used in the RR test at the execution of the proxy RO. In this case, not only it is possible to seize the success/failure of the proxy RO relative to each CN 41 by the cAR, but also it is possible to use this CoK, for example, in a case in which the MR 11 itself implements the RR test directly with respect to the CN 41 in the subsequent processing.

In a case in which some state variation exists in the step S114 ("YES" in the step S114), according to this state variation, an examination is made as to whether or not to carry out additional change processing (step S115: examine additional change according to state change). In this step S115, concretely, although the RO has been conducted relative to a predetermined CN 41 at the connection with the pAR, in the case of the proxy RO by the cAR, if the RO fails with respect to the predetermined CN 41, a determination is made as to whether or not to again carry out the RO with respect to the predetermined CN 41.

In addition, the MR 11 makes a request for the proxy RO in the case of the connection with the nAR (step S116: request for proxy to AR after the next connection change). As well as the processing in the step S108, the request for the proxy in the step S116 can be made at an arbitrary time point during the connection of the MR 11 with the cAR. In a case in which the AR 21 is designed to carry out the proxy RO without receiving a request from the MR 11, no need exists to carry out the processing in the step S116.

Still additionally, in a case in which the MR 11 is placed into an additional change waiting state in the step S109 and a determination to the effect of the implementation of some additional change processing has been made in the step S115, the above-mentioned processing in the step S110 and the step S11 take place. On the other hand, if a determination to the effect of no implementation of the additional change processing has been made in the step S115, it is placed into an additional change waiting state until a different additional change event (for example, the execution of an RO for a new CN) occurs.

If no state variation occurs in the step S114 ("NO" in the step S114), the additional change waiting state in the step S109 is taken after the request processing for the proxy by the AR 21 after the next connection change is conducted in the step S116.

Furthermore, a description will be given hereinbelow of one example of an operation of the AR 21 according to an embodiment of the present invention. FIG. 5 is a flow chart showing one example of an operation of an AR according to an embodiment of the present invention.

When a new MR 11 establishes a connection, the AR 21 first secures the connectivity with the MR 11 (step S201: connection with a new MR). In the processing of this step 201, for example, the AR 21 transmits an RA so as to perform the report of subnet identification information, the DAD (Duplicate Address Detection) processing on a CoA of the MR 11 and others. Moreover, it is also appropriate that the AR 21 inserts, into the RA, a bit indicative of the fact that it handles the present invention for notifying, to the MR 11, the fact that it is a handling AR.

Following this, the AR 21 confirms whether or not the MR 11 is a handling MR handling the present invention (an MR capable of carrying out the processing according to the present invention) (step S202: handling MR?). In this connection, since the AR 21 can grasp the fact of the MR 11 being a handling MR at the time point of the reception of a proxy RO execution request from the MR 11, for example, in a step S205 which will be mentioned later, the processing in the step S202 for the confirmation as to whether or not the MR 11 is a handling MR is not always required.

If the MR 11 is a handling MR ("YES" in the step S202), the AR 21 establishes a confidential relationship with the MR 11 'step S203: establishment of a confidential relationship with MR reaches success?). Incidentally, the establishment of a confidential relationship between the MR 11 and the AR 21 is not always unique special processing according to the present invention but it is also possible to utilize the confidential relationship between the MR 11 and the AR 21 established according to a conventional technique. In this connection, at this establishment of the confidential relationship, it is preferable that the cAR acquires the information used when the pAR uniquely identifies the MR 11 in order to prevent the replacement of the MR 11 (or the mistake of the MR 11) at the connection switching of the AR 21.

On the other hand, if the MR 11 is not a handling MR ("NO" in the step S202), the execution of the processing according to the present invention becomes impossible. In this case, the MR 11 carries out the RO by itself while the AR 21 conducts the processing based on a conventional technique (step S204: normal operation). Moreover, in a case in which the AR 21 cannot establish a confidential relationship with the MR 11 ("NO" in the step S203), preferably, the AR 21 does not carry out the proxy RO as the proxy for the MR 11, and as in the case in which the MR 11 is not a handling AR, it conducts the processing based on the conventional technique.

In a case in which the AR 21 has successfully established the confidential relationship with respect to the MR 11 ("YES" in the step S203), it enters a reception waiting state of an execution request for the proxy RO from the MR 11 (step S205: execution request for proxy RO received?) and enters a reception waiting state of the information on the RO from the MR 11 (step S206: information on RO received from MR?).

In a case in which the AR 21 has received an execution request for the proxy RO from the MR 11 ("YES" in the step S205), the AR 21 acquires the information on RO for the MR 11 from the pAR (step S207: receive information on RO for corresponding MR from pAR) and carries out the proxy RO on the basis of the information on the RO (step S208: conduct proxy RO instead of MR) and further notifies the result of this proxy RO to the MR 11 (step S209: report result to MR). The process in the step S207 and subsequent thereto after the AR 21 receives the above-mentioned proxy RO execution request corresponds to the steps S113 and for the MR 11 shown in FIG. 4. With respect to the report of the result in the step S209, for the purpose of reducing the traffic between the MR 11 and the AR 21, it is also appropriate to collectively transmit the results on the proxy RO relative to some CNs 41 or transmit only needed information (for example, difference information on a variation occurrence state).

In this connection, it is also acceptable that the AR 21 is designed to carry out the RO as the proxy for the MR 11 according to a detection of connection of the MR 11 without receiving the proxy RO execution request from the MR 11. In this case, for example, the AR 21 acquires a CoA (pCoA) of the MR 11 at the connection of the pAR from the MR 11 and acquires the information on the RO for the MR 11 from the pAR on the basis of the pCoA at the connection of this pAR, which enables the proxy RO to be conducted without receiving the proxy RO execution request from the MR 11.

Concretely, for example, the AR 21 acquires the information which enables the unique identification of the MR 11 and the information which enables the unique identification of the pAR such as the address of the with which the MR 11 made a connection before, thereby allowing the AR 21 to make a request for the information on the RO for a specified MR 11 to the pAR. In this connection, the AR 21 can specify the pAR by referring to a network prefix of the pCoA.

Moreover, in this case, although the information on the RO for the ME 11 is acquired from the pAR after the receipt of an execution request for the proxy RO from the MR 11, it is also possible that, for example, the information on the RO for the MR 11 is acquired from the pAR at an arbitrary timing in a stage in which the MR 11 is still in connection with the pAR. This is realizable, for example, in a manner such that the information on the RO for an arbitrary MR 11 is periodically exchanged between the ARs 21 having a confidential relationship with each other. Still moreover, particularly, in a case in which the MR 11 is moving on a predetermined trajectory and the prediction of the moving direction of the MR 11 (the next AR 21 with which the MR 11 is to make a connection) is feasible or in the case of the utilization of the FMIP (Fast Handovers for Mobile IP), the AR 21 can previously pass the information on the RO on the MR 11 to the AR 21 predicted as the next AR with which the MR 11 is to establish a connection. Yet moreover, it is also possible that the MR 11 passes the information on the RO to the AR 21 predicted as the next object of connection or makes a request for the proxy RO thereto. Add to it that the MR 11 can also notify the announcement of the movement and the identification information on the nAR which is the next object of connection.

On the other hand, in the step S206, if the AR 21 receives the information on the RO from the MR 11 ("YES" in the step S206), the AR 21 stores this information on the RO in the RO information storing unit 86 in a state associated with the identification information on the MR 11 (step S210: store information on RO). The above-mentioned process in which the AR 21 receives the information on the RO from the MR 11 and the operational flow advances to the step S210 corresponds to the processing in the step S108 and the step S111 related to the MR 11 in FIG. 4.

In addition, after the report of the result in the step S209 or the storage of the information on the RO in the step S210, the AR 21 is placed into an event waiting state (reception waiting state in step S205 and step S206). Still additionally, in a case in which the difference information on the additional change is received from the MR 11 in a state associated with the processing of the step S111 in the MR 11 shown in FIG. 4 , the information on the RO stored in the RO information storing unit 86 is updated on the basis of this difference information on the additional change.

In the above-mentioned operations in the MR 11 and the AR 21, although it is also acceptable that the information on the RO or the difference information (corresponding to the step S108 or S111 in FIG. 4, or the step S206 in FIG. 5) to be transmitted from the MR 11 to the AR 21 is sent with a message to be transmitted from the MR 11 to the AR 21, it is also possible that, at the transfer of a message including the information on the RO transmitted from the MR 11 to the HA 31 or CN 41, the AR 21 extracts and acquires the information on the RO from this message.

However, in a case in which the AR 21 extracts and manages the information from a message transmitted from the MR 11 to the HA 31 or CN 41, it is preferable to carry out the processing whereby, between the MR 11 and the AR 21, the MR 11 reaches the agreement on that the AR 21 extracts the information in a packet transmitted from the MR 11. This agreement by the MR 11 is made, for example, at the above-mentioned establishment of a confidential relationship (the step S103 in FIG. 4 and the step S203 in FIG. 5).

Moreover, when the MR 11 makes a judgment that there is a need to carry out the RO relative to a new CN 41, the MR 11 exchanges the HoTi and HoT through the HA 31 with respect to this CN 41. However, since these HoTI and HoT are transmitted through a tunnel between the MR 11 and the HA 31, there is a possibility that the AR 21 cannot seize the contents of these HoTI and HoT. In this case, it needs that the MR 11 notifies the HoK to be used for the HoTI and the HoT together with the identification information on the MR 11 and the address of the CN 41 to the AR 21. It is desirable that this notification is made in a secure state through the use of the encryption or the like on the basis of the confidential relationship between the MR 11 and the AR 21.

Still moreover, in a case in which the AR 21 can look at the contents of a tunnel packet between the MR 11 and the HA 31, it is also possible to extract the information on the RO such as the HoK and the address of the CN 41 from the tunnel packet. On the other hand, since the CoTI and CoT directly pass through the AR 21 without particularly passing through a tunnel, the AR 21 can pick up the contents of the CoTI and CoT easily.

The AR 21 puts, in the RO information storing unit 86, the information extracted from the packet transmitted from the MR 11 (for example, the HoK or Cok used for the RR test and BU) in a state associated with the identification information on the MR 11 and the address of the CN 41. There is a possibility that there is a need to update this CoK before the term of validity reaches the expiration, and the AR 21 can carry out the generation of a CoK and the updating operation therefor as proxy. Moreover, preferably, the CoK updated by the AR 21 as proxy is reported to the MR 11 so as to achieve the synchronization between the CoKs both the MR 11 and the AR 21 have. Still moreover, as will be mentioned later, for example, if the AR 21 has a confidential relationship relative to the HA, the AR 21 can further carry out the generation of an HoK and the updating operation therefor as proxy.

In addition, when the MR 11 moves, the AR 21 confirms the authentication before and after the movement of the MR 11 and carries out the processing by use of the information preserved. It is preferable that the exchange of information between the ARs is made on the basis of the confidential relationship between the ARs from which the movement destination of the MR 11 is known until the prexy RO is conducted.

The AR 21 generates a new CoK with respect to the CN 41 and generates a BU packet combined with the HoK and further registers a new address (nCoK) of the MR 11 in this CN 41. It is preferable that the result of the BU conducted by the AR 21 as proxy is reported to the MR 11. In this case, the report is made with a mess age produced by collecting the results of the BU on the respective CNs 41, thereby enabling the reduction of the traffic.

Although in the above-described embodiment the MR 11 makes a proxy request for the RO to be conducted with respect to the CN 41 to the AR 21, when the information on the confidential relationship with the HA 31 is further passed to the AR 21, the MR can make the AR 21 conduct, as proxy, the processing to be carried out by the MR 11 with respect to the HA 31. In this case, for example, it is necessary that a confidential relationship is established between the AR 21 and the HA 31 so that the AR 21 can generate an HoK.

However, in a case in which the AR 21 cannot transmit a packet to the HA 31 through a tunnel between the MR 11 and the HA 31, it needs that the MR 11 itself carries out the processing for the generation of an HoK. For the AR 21 to this HoK generation processing as proxy, the AR 21 is made to generate a tunnel packet through the HA 31, that is, there is a need for the AR 21 to receive key information for the generation of a tunnel packet between the MR 11 and the HA 31 from the MR 11. The transmission of this key information for the generation of the tunnel packet from the MR 11 to the AR 21 is required to be safely made on the basis of the confidential relationship between the MR 11 and the AR 21.

For example, it can be such that the AR 21 establishes a confidential relationship with respect to the HA 31 and the MR 11, the AR 21 and the HA 31 are made to have a confidential relationship with each other so that, when the AR 21 separately makes a communication with the HA 31, the AR 21 can exchange the HoTI and HoT as the proxy for the MR 11. However, in this case, there is a need for the HA 31 which is made to accept this confidential relationship.

Moreover, when the AR 21 becomes capable of transmitting the HoTI and HoT through the HA 31, the updating of the HoK related to the expiration of the term of validity of the HoK also becomes feasible, so the traffic between the MR 11 and the AR 21 is further reducible, and the new BU after the movement of the MR 11 reaches completion.

Still moreover, in a case in which the AR 21 to which the MR 11 moves is not a handling AR or when it is the AR 21 based on another confidential relationship different from the confidential relationship among a series of ARs 21 (that is, in the case of the movement to the AR 21 (ARₓ in FIG. 1) having no confidential relationship with the AR 21 before the movement), there is a possibility that the safe delivery of the information on the RO from the AR 21 with which the MR 11 is presently in connection to the AR 21 to which the MR 11 moves becomes impossible.

If the AR with which the MR 11 has established (tries to establish) a connection is as mentioned above, in the processing which is for conforming whether or not it is the handlingAR in the step S102 shown in FIG. 4, or in the processing which is for establishing the confidential relationship in the step S103 shown in FIG. 4, the MR 11 can grasp this fact. In this case, the request for the proxy RO becomes invalid, the operational flow proceeds to the step S107 and the steps subsequent thereto in FIG. 4, and the MR 11 is required to carry out the RO by itself.

Thus, preferably, assuming that the AR 21 which is the next movement destination cannot carry out the proxy RO for the MR 11, the MR 11 properly receives, from the AR 21, the result of the proxy RO updated on occasion by the AR 21 and the key information at that time to hold the latest information. Tentatively, in a case in which the MR 11 moves the AR 21, which cannot carry out the proxy RO for the MR 11, in a state where the MR 11 fails to receive the latest information on the RO used for the proxy RO by the AR 21, on the basis of the expiration of the term of validity of the key information, the failure of BU or the like, the MR 11 seizes that the information held in the MR 11 is not the latest information. In this case, it can once return to a state of carrying out the RO by itself according to a conventional technique and resume the RO from the beginning as before.

Moreover, in a case in which the MR 11 is in a state in which a deeper confidential relationship such as IPseC is establishable with respect to the CN 41, if the MR 11 does not report the key information on the confidential relationship relative to the CN 41, there is a possibility that the proxy RO by the AR 21 becomes impossible. Although this greatly depends upon the comparison inmagnitude between the confidence level between the MR 11 and the CN 41 and the confidence level between the MR 11 and the AR 21, if the MR 11 cannot disclose the key information on the confidential relationship relative to the CN 41 toward the AR 21, difficulty is encountered in making a request for the proxy RO to the AR 21. In this case, the MR 11 is made to carry out the RO by itself as before with respect to the relevant CN 41. However, this case in which the key information on the confidential relationship relative to the CN 41 cannot be disclosed toward the AR 21 is uncommon, and when the request for the proxy RO is made to the CN 41 other than such a CN 41, the purpose of the present invention is achievable as a whole.

That is, under an environment which does not handle an operation according to the present invention, the MR 11 and the AR 21 carry out an operation based on a conventional technique with respect to the CN 41. For example, the MR can switch the operation by notifying, from the AR 21 to the MR 11, the fact that an environment related to a specified CN 41 does not agree with an operation according to the present invention. Moreover, it is also appropriate that the MR 11 conducts an operation on the assumption that an arbitrary CN 41 is in an environment which allows the operation according to the present invention and, if a failure occurs in that procedure, only makes the switching to the normal mode for carrying out an operation as before.

Although the description of the above-described embodiment of the present invention relates to the configurations and operations of the MR 11 and the AR 11 in a case in which the AR carries out the RO as the proxy for the MR 11, it is obvious that a person skilled in the art can easily expand them to configurations and operations when an AR carries out the RO as the proxy for an MH.

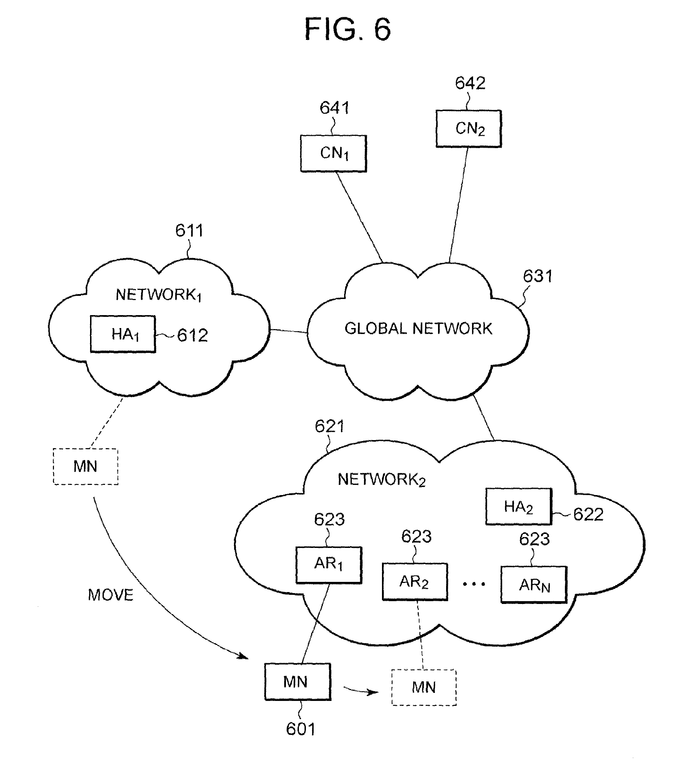

Furthermore, it is also possible to expand the configurations and operations according to the embodiment of the present invention to the relationship between a mobile node (which will hereinafter be referred to as an MN) and the HA. The MN is a general term of a mobile communication apparatus including MR and MH. Referring to FIG. 6, a description will be given hereinbelow of an example of an operation in a case in which the present invention is applied to the relationship between an MN and an HA.

FIG. 6 is a block diagram showing an example of a configuration of a communication system according to another embodiment of the present invention. FIG. 6 is an illustration of a state in which a network; 611 and a network₂ 621 which have a confidential relationship (roaming relationship) with each other through a roaming agreement or the like are connected to a global network 631.

In the network; 611 and the network₂ 621, there are respectively placed an HA₁ 612 and an HA₂ 622 which are made to manage the positional information on an MN 601 in the respective networks. In the following description, the MN 601 is provided in the network₁ 611 and an HoA of the MN 601 managed in the HA₁ 612 will be referred to as HoA1 while the MN 601 is provided in the network₂ 621 and an HoA of the MN 6 01 managed in the HA₂ 622 will be referred to as HoA2. Moreover, the network₂ 621 includes N ARs 623 (in FIG. 6, there are shown three ARs of AR₁, AR₂, AR_{N}). Although not shown, the network₁ 611 also has a configuration similar to that of the network₂ 621 (that is, a configuration in which one or more ARs are located).

Each of the ARs 623 can produce a subnet with which the MN 601 can make a connection and allocate a CoA suitable for this subnet to the MN 601 connected to the subnet and provide the connectivity to the global network 631. That is, the MN 601 connected to each of the ARs 623 can make communication with a CN₁ 641 or CN₂ 642.

As shown in FIG. 6, in a case in which the MN 601 has conducted the roaming between the networks having a roaming relationship with each other (that is, for example, when the MN 601 has changed the connection from the network₁ 611 to the network₂ 621), there is a case in which the HoA2 is provided in the network₂ 621 after the connection change.

However, when the HoK to be used is directly changed from the HoK1 to the HoK2 at the time that the MN 601 changes the connection from the network₁ 611 to the network₂ 621, there is a problem in that the network manager (the HA₁ 612 of the network₁ 611) before the roaming cannot manage the movement of the MN 601. In addition, the CN which knows only the HoA1 as the HoA of the MN 601 sets the HoA1 at the destination address with respect to a packet directed to the MN 601. Accordingly, at the time that the HA₁ 612 of the network₁ 611 failed to manage the movement of the MN 601, there is a possibility that this packet cannot arrive at the MN 601.

Furthermore, there is a problem in that, when the communication already started in the network₁ 611 before the roaming, the CN which is requested for the continuous communication even in the network₂ 621 after the roaming once cuts off the session with the MN 601 because difficulty is encountered in identifying the MN 601 due to the change of the HoA of the MN 601. For this reason, with respect to such a CN, it is preferable to continuously hold the binding information on the former HoA (binding information on the HoA1 held by the CN before the roaming of the MN 601). Incidentally, in a case in which the MN 601 separately transmits the positional information on the network₁ 611 to the CN or the former HA₁ 612, a large volume of information is transmitted onto a radio transmission line to the AR 623 at the timing that the MN 601 changes the AR 623, which causes excessive consumption of the communication band and congestion.

For the purpose of coping with such cases, in another embodiment of the present invention, the communication management device (having the configuration shown in FIG. 3) of the AR 21 according to the above-described embodiment of the present invention is introduced into the HA₂ 622 which is a roaming destination. With reference to FIG. 6, a description will be given hereinbelow of an operation in a case in which the communication management device according to the present invention is introduced into the HA₂ 622. In the following description, a CN which has started the communication with the MN 601 which has used the HoA1 before the implementation of the roaming (or a CN which recognizes the MN 601 as the HoA1) is taken as a CN₁ 641, and a CN which has started the communication with the MN 601 using the HoA2 after the movement to the roaming destination is taken as a CN₂ 642.

In a case in which the MN 601 changes the connection from the before-roaming network₁ 611 to the roaming-destination network₂ 621, the MN 601 establishes a connection with one (AR₁ 623 in FIG. 6) of the ARs pertaining to the roaming-destination network₂ 621 to acquire a CoA suitable for a subnet of the AR₁ 623. At the time of the new connection with the roaming-destination network; 621, the MN 601 can carry out an operation similar to that in the above-described embodiment of the present invention to set the proxy for the MN 601 for conducting the processing for the RO.

However, although in the above-described embodiment of the present invention the communication management device according to the present invention is introduced into the AR 21 so that the AR 21 carries out the proxy RO, the another embodiment of the present invention differs therefrom in that the communication management device according to the present invention is introduced into the HA₂ 622 so that the HA₂ 622 conducts the proxy RO processing. Therefore, in this case, the information on the RO is reported from the MN 601 to the HA₂ 622. Moreover, the information on the RO includes the address of the HA₁ 612 for identifying the network₁ 611 before the roaming (or arbitrary information for identifying the network₁ 611 before the roaming) and the HoA1. Moreover, the information on the RO includes the address of the HA₁ 612 and the address of the CN₁ 641 as an object of the proxy RO. Preferably, an identifier is given which is indicative of the fact that these objects of request (the partners for which the HA₂ 622 performs the proxy RO, such as the HA₁ 612 and the CN₁ 641) recognize the MN 601 as the HoA1.

In addition, as in the case of the AR 21 in the above-described embodiment of the present invention, the HA₂ 622 which has received the information on the RO needed for the proxy RO processing from the MN 601 stores this information on the RO and carries out the RO relative to the HA₁ 612 or the CN₁ 641 in a manner such that, for example, the reception of an execution request for the proxy RO from the MN 601 is used as a trigger. Moreover, it is also acceptable that the HA₂ 622 conducts the proxy RO in a manner such that the reception of a BU message from the MN 601 is used as a trigger. Still moreover, it is also acceptable that the AR₁ 623 with which the MN 601 has established a connection transmits, to the HA₂ 622, a message serving as a trigger.

Although the HA₂ 622 carries out the RR test and BU message transmission processing with respect to the CN₁ 641 at the execution of the proxy RO for the MN 601, since it previously has a mutual confidential relationship with the HA₁ 612, it is possible to carry out only the processing for the transmission of the BU message without conducting the RR test. Moreover, the BU message to be transmitted to the HA₂ 622 or the CN₁ 641 can include the information indicative of the relationship between the HoA1 and the CoA, and it can further include the information indicative of the relationship between the HoA1 and the HoA2 and the information indicative of the relation ship between the HoA1 and the information (for example, the network prefix of the network₂ 621) for identifying the roaming-destination network₂ 621.

Moreover, preferably, the MN 601 makes a communication with the CN₂ 642 which has started the communication after moving to the roaming destination and then acquiring the HoA2 by use of the HoA2 but not the HoA1. In this case, the HA₂ 622 carries out the proxy RO for the MN 601 using the HoA2 with respect to the CN₂ 642. Therefore, it is preferably, the HA₂ 622 stores the information on the RO so as to enable clearly distinguishing between the object of execution of the proxy RO (for example, HA₁ 612 or CN₁ 641) based on the state where the HoA of the MN 601 is the HoA1 and the object of execution of the proxy RO (for example, CN₂ 641 based on the state where the HoA of the MN 601 is the HoA2. Concretely, as the information on the RO, the HA₂ 622 receives, from the MN 601, for example, the information in which the address of an object of execution of the proxy RO and the information indicative of one of the HoA1 and the HoA2 which is to be used for the proxy are associated with each other, and stores this information on the RO.

In addition, whenever the MN 601 moves within the roaming-destination network₂ 621 and changes the connection to a new AR (for example, it changes the connection from the AR₁ 623 to the AR₂ 623) to acquire a new CoA, the HA₂ 622 receives the report on the new CoA from the MN 601. The HA₂ 622 replaces the CoA, associated with the HOA2, with the new CoA in its own database and distinguishes between a node (for example, HA₁ 612 or CN₁ 641) which is an object of execution of the proxy RO as the HoA1 based on the related information on the RO and a node (for example, CN₂ 642) which conducts the proxy RO as the HoA2 and performs the proxy RO for each of them.

In particular, the proxy RO (i.e., BU) for the HA₁ 612 requires a special confidential relationship. For example, it is preferable that a confidential relationship on the execution of the proxy RO according to the present invention is previously set in the roaming agreement between the network₁ 611 to which the HA₁ 612 pertains and the network₂ 621 to which the HA₂ 622 pertains and, between the HA₂ 622 and the HA₁ 612, the proxy RO is conducted according to a unique authentication method between HA₂ 622-HA₁ 612 different from a conventional authentication method between MN-HA.

Moreover, there is a case in which, also with respect to the transfer of the information on the RO between HAs, the employment of a method different from the conventional method for the transfer of the information on the RO is preferable. For example, in a case in which the MN 601 further moves to establish a connection with a different network (network₃), not shown, even if the network₃ has a roaming relationship with the network₁ 611 to which the MN 601 originally pertains, there is a possibility that the network₃ does not have the roaming relationship with the ne twork (network₂ 621) with which it has made the connection immediately before. In this case, without employing the method of transferring the information on the RO at successive intervals like the operation mentioned above (concretely, the method of transferring the information on the RO from the HA₂ 622 of the network₂ 621 to an HA₃ of the network₃), there is a case in which it is preferable that the information on the RO is transferred through the HA₁ 612 to the new HA₃. Since the method of transferring the information on the RO between networks depends greatly on the roaming agreement between the networks, it is also appropriate that the HA is designed to make a dynamic judgment on the method for the transfer of the information on the RO on the basis of this roaming agreement so as to make the switching to a proper RO information transferring method.

As described above, according to the another embodiment of the present invention, even in a case in which the MN 601 moves between networks having a roaming relationship with each other or when a change of the HoA of the MN 601 takes place, an operation for the proxy RO according to the present invention can be effectively conducted, thereby achieving the effective utilization of the communication band which is an object of the present invention.

In addition, it is also possible to combine the above-described two embodiments of the present invention (the procedure of the proxy RO between MN and AR (i.e., proxy RO procedure by AR), the procedure of the proxy RO between MN and HA (i.e., proxy RO procedure by HA). In this case, for example, the distribution of the processing load becomes possible by appropriately distributing, to AR and HA, the processing executable by only the AR (the processing to be conducted at the connection of MN, and others) and the processing executable by only the HA (the management of a plurality of HoAs, the proxy RO relative to a node making a communication using an HoA provided in the network with which the MN has established a connection before movement, the reference of roaming agreement, and others). In this case, it is preferable that the MN passes, to the AR, the information on the RO related to the processing executable by the AR while it passes, to the HA, the information on the RO related to the processing executable by the HA so that these information on the RO are transmitted between the ARs and between the HAs, respectively. Moreover, with respect to the processing (processing executable by both the AR and HA) other than the above-mentioned processing, any allocation thereof is acceptable, and both the AR and HA can also carry out the same processing in cooperation with each other.

For example, in FIG. 6, the HA₂ 622 carries out the proxy RO for the CN₁ 641 or the HA₁ 612 and each AR conducts the proxy RO for the CN₂ 642, while the management and transfer of the related information on the RO, the report of a result and others are executed by the HA₂ 622 or the AR 623. Moreover, the MN 601 reports the needed information on the RO to each of the HA₂ 622 and the AR 623 and then makes the proxy request or execution request to only the AR 623 while the AR 623 transfers the proxy request or execution request to the HA₂ 622 when needed, thus enabling the report of the proxy request or execution request to the HA₂ 622. Incidentally, in a case in which the distribution of the processing is conducted between the AR and HA, as the method of reporting the information on the RO, the proxy request or execution request from the MN to AR or HA, various combinations are considerable, and the implementation of an arbitrary combination is feasible.

In addition, in the above-described embodiments of the present invention, an MR carries out an RR test to enable a CN verify the relation ofMR's HoA and CoA, and the MR' s HoA and CoA are transmitted as binding information to the CN. However, it is further considered that there is a case in which a mobile network itself under the MR is set as an object of RO. In this case, it is preferable that the CIV can verify that the MR itself is a possessor of the mobile network and the identification information (for example, network prefix) on the mobile network is transmitted as the aforesaid binding information to the CN. In this case, for example, it is necessary that the RR test is improved for the verification of the mobile network of the MR and the exchange of the network prefixes, the key information related thereto and others is made at the RR test. Moreover, preferably, these information are put in the information on the RO so as to simultaneously carry out the proxy RO related to the mobile network.

The respective functional blocks used in the above description of the embodiments of the present invention are typically realized with an LSI (Large Scale Integration) which is an integrated circuit. It is also acceptable that these blocks are individually formed as one chip, or that a portion of or all of these blocks are formed as one chip. Although an LSI is taken in this case, it is sometimes referred to as an IC (Integrated Circuit), system LSI, super LSI or ultra LSI according to the level of integration.

Moreover, the technique for the formation of an integrated circuit is not limited to the LSI, but it is also realizable with a dedicated circuit or a general-purpose processor. After the manufacturing of an LSI, it is also acceptable to utilize an FPGA (Field Programmable Gate Array) which enables the programming or a reconfigurable processor which allows the reconfiguration of connections and setting of circuit cells in the interior of the LSI.

Still moreover, if a technique for the formation of an integrated circuit replaceable with the LSI appears owing to advance in semiconductor technology or a different technology derived therefrom, the functional blocks can naturally be integrated through the use of this technique. For example, a biotechnology or the like may be applicable.

### INDUSTRIAL APPLICABILITY

The present invention provides the advantages of reducing the volume of information to be transmitted between a mobile node and an access router which are connected to each other through radio communication for avoiding the congestion between the mobile node and the access router, and it is applicable to communication technology in communication using the IP, and is particularly applicable to communication technology related to a mobile network where the entire network moves according to the movement of the mobile router.

## Claims

1. A communication management method of controlling an operation of a mobile router having a mobile network as a subordinate and moving while changing a connection with each of a plurality of access routers, comprising:
a route optimization information reporting step in which, in a state before the movement, said mobile router reports information on route optimization relative to a communication node, to which the route optimization is conducted, to the access router in connection before the movement; and
a proxy requesting step in which said mobile router makes a request to the access router in connectionbefore the movement for the transmission of the information on the route optimization to the access router establishing connection after the movement so that the access router establishing connection after the next movement is capable of carrying out proxy processing for the route optimization for said mobile router by use of the information on the route optimization reported in said route optimization information reporting step.

2. The communication management method according to claim 1, wherein the report of the information in said route optimization information reporting step is made with a message addressed to the access router in connection before the movement or a message having a state where the information is extractable by the access router in connection before the movement and addressed to a node different from the access router in connection before the movement.

3. The communication management method according to claim 1, comprising an execution request transmitting step in which, after a change of connection from the access router in connection before the movement to the access router establishing connection after the movement, said mobile router makes a request for an execution of the proxy processing for the route optimization to the access router establishing connection after the movement.

4. The communication management method according to claim 1, comprising a route optimization executing step in which, after a change of connection from the access router in connection before the movement to the access router establishing connection after the movement, when said mobile router grasps the fact that the proxy processing for the route optimization is not conducted by the access router establishing connection after the movement, said mobile router itself executes the route optimization.

5. The communication management method according to claim 1, comprising a result receiving step in which, after a change of connection from the access router in connection before the movement to the access router establishing connection after the movement, said mobile router receives, from the access router establishing connection after the movement, a result of the proxy processing for the route optimization conducted by the access router establishing connection after the movement on the basis of the information on the route optimization held by the access router in connection before the movement.

6. The communication management method according to claim 5, comprising an additional change execution judging step in which said mobile router makes a judgment as to whether or not a need exists to conduct additional processing for the route optimization.

7. The communication management method according to claim 6, comprising an additional processing executing step in which, when the judgment in said additional change execution judging step shows that a need exists to conduct the additional processing for the route optimization, said mobile router itself conducts the additional processing for the route optimization.

8. The communication management method according to claim 6, comprising an additional Change information reporting step in which, when the judgment in said additional change execution judging step shows that a need exists to conduct additional processing for the route optimization, said mobile router reports information for conducting the additional processing for the route optimization to the access router establishing connection after the movement.

9. The communication management method according to claim 8, wherein the report of the information in said additional change information reporting step is made with a message addressed to the access router establishing connection after the movement or a message having a state where the information is extractable by the access router establishing connection after the movement and addressed to a node different from the access router establishing connection after the movement.

10. The communication management method according to claim 3, wherein the access router establishing connection after the movement is designed to make a judgment as to whether or not a need exists to conduct additional processing for the route optimization, and the communication management method comprising an additional change result receiving step in which said mobile router receives a result of the additional processing for the route optimization, conducted by the access router establishing connection after the movement, from the access router establishing connection after the movement.

11. The communication management method according to claim 1, comprising a confidential relationship establishing step in which, after said mobile router establishes a connection with the access router, said mobile router tries to establish a confidential relationship for safe transmission of information with respect to the access router connected.

12. The communication management method according to claim 11, comprising a normal operation step in which, when in said confidential relationship establishing step said mobile router fails to establish the confidential relationship for the safe transmission of the information with respect to the access router connected, said mobile router itself conducts the route optimization and then conduct an operation according to a conventional technique.

13. The communication management method according to claim 11, wherein, when said mobile router achieves the establishment of the confidential relationship for the safe transmission of the information with respect to the access router, connected, in said confidential relationship establishing step, the information on the route optimization is transmitted in a safe state on the basis of the confidential relationship between said mobile router and the access router connected.

14. The communication management method according to claim 1, wherein, in said route optimization information reporting step, said mobile router selects a route between said mobile router and said communication node and reports the information on the route optimization relative to the selected route.

15. A communication management method of controlling an operation of an access router establishing a connection with a mobile router having a mobile network as a subordinate, comprising:
a route optimization information acquiring step in which said access router acquires information on route optimization relative to a communication node, to which said mobile router conducts the route optimization, from said mobile router connected to said access router;
a route optimization information storing step of storing the information on the route optimization for said mobile router; and
a route optimization information transmitting step of transmitting the information on the route optimization for said mobile router, stored in said route optimization information storing step, to a different access router with which said mobile router establishes a connection after movement.

16. The communication management method according to claim 15, wherein, in said route optimization information acquiring step, said access router acquires the information through a message transmitted from said mobile router and addressed to said access router, or said access router acquires the information through a message having a state where the information is extractable by said access router and transmitted from said mobile router and addressed to a node different from said access router.

17. A communication management method of controlling an operation of an access router establishing a connection with a mobile router having a mobile network as a subordinate, comprising:
a route optimization information acquiring step in which said access router acquires information on route optimization for said mobile router from a different access router in connection before movement of said mobile router connected to said access router;
a route optimization information storing step of storing the information on the route optimization for said mobile router; and
a route optimization proxy executing step in which said access router conducts proxy processing for the route optimization for said mobile router by use of the information on the route optimization stored in said route optimization information storing step.

18. The communication management method according to claim 17, wherein, in said route optimization information acquiring step, said access router acquires the information on the route optimization and identification information for specifying said mobile router before the movement from said different access router to specify the route optimization information on said mobile router connected to said access router.

19. The communication management method according to claim 15, wherein a confidential relationship for safe transmission of information is established between said access router and said different access router, and the transmission of the information on the route optimization is made in a safe state on the basis of the confidential relationship between said access router and said different access router.

20. The communication management method according to claim 17, wherein a confidential relationship for safe transmission of information is established between said access router and said different access router, and the transmission of the information on the route optimization is made in a safe state on the basis of the confidential relationship between said access router and said different access router.

21. The communication management method according to claim 15, wherein, in said route optimization information storing step, said access router stores, as the information on the route optimization, identification information on said mobile router, identification information on said mobile network, identification information on a communication node to which the route optimization is made from said mobile router and information to be used for an RR test between said mobile router and said communication node in a state associated with each other.

22. The communication management method according to claim 17, wherein, in said route optimization information storing step, said access router stores, as the information on the route optimization, identification information on said mobile router, identification information on said mobile network, identification information on a communication node to which the route optimization is made from said mobile router and information to be used for an RR test between said mobile router and said communication node in a state associated with each other.

23. A communication management device, which is located in a mobile router having a mobile network as a subordinate and made to move while changing a connection with each of a plurality of access routers, comprising:
route optimization information reporting means for, in a state before movement, reporting information on route optimization relative to a communication node, to which the route optimization is conducted, to the access router in connection before the movement; and
proxy requesting means for making a request to the access router in connection before the movement for transmitting the information on the route optimization to the access router establishing connection after next movement so as to enable the access router establishing connection after the movement to carry out proxy processing for the route optimization for said mobile router by use of the information on the route optimization reported by said route optimization information reporting means.

24. The communication management device according to claim 23, wherein said route optimization information reporting means is made to carry out the report of the information through the use of a message addressed to the access router in connection before the movement or a message having a state where the information is extractable by the access router in connection before the movement and addressed to a node different from the access router in connection before the movement.

25. The communication management device according to claim 23, comprising execution request transmitting means for, after a connection change is made from the access router in connection before the movement to the access router establishing connection after the movement, making a request for the proxy processing for the route optimization to the access router establishing connection after the movement.

26. The communication management device according to claim 23, comprising route optimization executing means for, after a connection change is made from the access router in connection before the movement to the access router establishing connection after the movement, when grasping the fact that the proxy processing for the route optimization is not conducted by the access router establishing connection after the movement, executing the route optimization by itself.

27. The communication management device according to claim 23, comprising result receiving means for, after a connection change is made from the access router in connection before the movement to the access router establishing connection after the movement, receiving, from the access router establishing connection after the movement, a result of the proxy processing for the route optimization conducted by the access router establishing connection after the movement on the basis of the information on the route optimization held in the access router in connection before the movement.

28. The communication management device according to claim 27, comprising additional change execution judging means for making a judgment as to whether or not a need exists to conduct additional processing for the route optimization.

29. The communication management device according to claim 28, comprising additional processing executingmeans for, when the judgment in said additional change execution judging means shows that a need exists to conduct the additional processing for the route optimization, executing the additional processing for the route optimization by itself.

30. The communication management device according to claim 28, comprising additional change information reporting means for, when the judgment in said additional change execution judging means shows that a need exists to conduct the additional processing for the route optimization, reporting information for the additional processing for route optimization to the access router establishing connection after the movement.

31. The communication management device according to claim 30, wherein said additional change information report ing means reports the information with a message addressed to the access router establishing connection after the movement or with a message having a state where the information is extractable by the access router establishing connection after the movement and addressed to a node different from the access router establishing connection after the movement.

32. The communication management device according to claim 25, wherein the access router establishing connection after the movement is designed to make a judgment as to whether or not a need exists to conduct the additional processing for the route optimization, and the communication management device comprises additional change result receiving means for receiving, from the access router connected after the movement, a result of the additional processing for the route optimization conducted by the access router establishing connection after the movement.

33. The communication management device according te claim 23, comprising confidential relationship establishing means for, after said mobile router establishes a connection with the access router, trying to establish a confidential relationship for safely transmitting information with respect to the access router connected.

34. The communication management device according to claim 33, comprising means for, when said confidential relationship establishing means fails to establish the confidential relationship for the safe transmission of the information with respect to the access router connected, making the mobile router itself conduct the route optimization and then conduct an operation according to a conventional technique.

35. The communication management device according to claim 33, wherein, when said confidential relationship establishing means achieves the establishment of the confidential relationship for the safe transmission of the information with respect to the access router connected, the information on the route optimization is transmitted in a safe state on the basis of the confidential relation between said mobile router and the access router connected.

36. The communication management device according to claim 23, wherein said route optimization information reporting means is made to select a route between said mobile network and said communication node and report the information on the route optimization on the selected route.

37. A communication management device, which controls an operation of an access router establishing a connection with a mobile router having a mobile network as a subordinate, comprising:
a route optimization information acquiring means for acquiring information on route optimization relative to a communication node, to which said mobile router conducts the route optimization, from said mobile router connected to said access router;
a route optimization information storing means for storing the information on the route optimization acquired by said route optimization information acquiring means; and
a route optimization information transmitting means for transmitting the information on the route optimization for said mobile router, stored in said route optimization information storing means, to a different access router with which said mobile router establishes a connection after movement.

38. The communication management device according to claim 37, wherein said route optimization information acquiring means acquires the information through a message transmitted from said mobile router and addressed to said access router, or said route optimization information acquiring means acquires the information through a message having a state where the information is extractable by said access router and transmitted from said mobile router and addressed to a node different from said access router.

39. A communication management device, which controls an operation of an access router establishing a connection with a mobile router having a mobile network as a subordinate, comprising:
a route optimization information acquiring means for acquiring information on route optimization for said mobile router from a different access router in connection before movement of said mobile router connected to said access router;
a route optimization information storing means for storing the information on the route optimization acquired by said route optimization information acquiring means; and
a route optimization proxy executing means for conducting proxy processing for the route optimization for said mobile router by use of the information on the route optimization for said mobile router stored in said route optimization information storing means.

40. The communication management device according to claim 39, wherein said route optimization information acquiring means acquires the information on the route optimization and identification information for specifying said mobile router before the movement from said different access router to specify the route optimization information for said mobile router connected thereto.

41. The communication management device according to claim 37, wherein a confidential relationship for safe transmission of information is established between said access router and said different access router, and the transmission of the information on the route optimization is made in a safe state on the basis of the confidential relationship between said access router and said different access router.

42. The communication management device according to claim 39, wherein a confidential relationship for safe transmission of information is established between said access router and said different access router, and the transmission of the information on the route optimization is made in a safe state on the basis of the confidential relationship between said access router and said different access router.

43. The communication management device according to claim 37, wherein, as the information on the route optimization, identification information on said mobile router, identification information on said mobile network, identification information on a communication node to which the route optimization is made from said mobile router and information to be used for an RR test between said mobile router and said communication node are stored in said route optimization information storing means in a state associated with each other.

44. The communication management device according to claim 39, wherein, as the information on the route optimization, identification information on said mobile router, identification information on said mobile network, identification information on a communication node to which the route optimization is made from said mobile router and information to be used for an RR test between saidmobile router and said communication node are stored in said route optimization information storing means in a state associated with each other.

45. A communication management method of controlling an operation of a mobile node moving while changing a connection with each of a plurality of access routers, comprising:
a route optimization information reporting step in which, in a state before movement, said mobile node reports information on route optimization relative to a communication node, to which the route optimization is conducted, to a predetermined network; and
a request proxy step of, when saidmobile node then changes the access router, making a request to said predetermined network node for conducting proxy processing for the route optimization for said mobile node by use of the information on the route optimization.

46. A communication management method of controlling an operation of a predetermined network node made to conduct proxy processing for a mobile node connected to an access router, comprising:
a route optimization information acquiring step of acquiring information on route optimization relative to a communication node, to which said mobile node conducts the route optimization, from said mobile node connected to said access router;
a route optimization information storing step of storing the information on the route optimization for said mobile router; and
a route optimization proxy processing step of, when said mobile node establishes a connection with a different access router after movement, conducting proxy processing for the route optimization for said mobile node by use of the information on the route optimization for said mobile node stored in said route optimization information storing step.

47. A communication management device, which is located in a mobile node moving while changing a connection with each of a plurality of access routers, comprising:
route optimization information reporting means for, in a state before movement, reporting information on route optimization relative to a communication node, to which the route optimization is conducted, to a predetermined network; and
request proxy means for, when said mobile node then changes the access router, making a request to said predetermined network node for conducting proxy processing for the route optimization for said mobile node by use of the information on the route optimization.

48. A communication management device, which controls an operation of a predetermined network node made to conduct proxy processing for a mobile node connected to an access router, comprises:
a route optimization information acquiring means for acquiring information on route optimization relative to a communication node, to which said mobile node conducts the route optimization, from said mobile node connected to said access router;
a route optimization information storing means for storing the information on the route optimization for said mobile node; and
a route optimization proxy processing means for, when said mobile node establishes a connection with a different access router after movement, conducting proxy processing for the route optimization for said mobile node by use of the information on the route optimization for said mobile node stored in said route optimization information storing means.
